# EUROPEAN PATENT SPECIFICATION

(11) **EP 4 538 549 B1**
(45) Date of publication and mention of the grant of the patent: **07.10.2026**
(21) Application number: 25160248.8
(22) Date of filing: 30.03.2022
(51) Int. Cl.: B01D 46/00, B01D 46/24, B01D 46/42, B01D 46/58, F02C 7/052, F16B 37/08

(54) **FILTER SYSTEM**
FILTERSYSTEM
SYSTÈME DE FILTRE

(30) Priority: 31.03.2021 US 202163168850 P; 02.03.2022 US 202263315845 P
(43) Date of publication of application: 16.04.2025
(62) Document number(s) of the earlier application(s) in accordance with Art. 76 EPC: 22723501.7 / 4 291 319
(73) Proprietor: Parker-Hannifin Corporation, Cleveland, Ohio 44124 (US); Altair (UK) Ltd., Hemel Hempstead HP2 4TZ (GB)
(72) Inventor: BALLANGER, James J., Gosport PO13 0TH (GB); DENT, Casey C., Olathe KS 66061 (US); STEELE, Richard P., Southampton SO30 2GW (GB); HINER, Stephen D., Salisbury SP5 5RX (GB); AJAYI, Timothy A., Brentford TW8 0DG (GB); TAYLOR, Kate, Liphook GU30 7HR (GB)
(74) Representative: Murgitroyd & Company

(56) References cited:
- US-A1- 2011 290 116

## Description

### FIELD OF THE INVENTION

This application generally relates to filter systems, filter elements, and mounting mechanisms for filtration applications.

### BACKGROUND OF THE INVENTION

Filter systems often use replaceable filter elements that are replaced when damaged or have reached the end of their serviceable life (e.g. when they have become full of particulates removed from the fluid being filtered). Portions of the filter systems, such as portions of the filter system to which the filter elements are mounted or mounting mechanisms for securing the filter elements within the filter system, are often reusable components.

Filter systems such as air intake systems will often have a mounting arrangement where a threaded shaft extends through an end of a filter element. An attachment member such as a nut or threaded handle will attach to the end of the threaded shaft and secure the filter element to the mounting arrangement.

One such system where this type of filter mounting arrangement is often employed is in air intakes for gas turbines. Here, a plurality of filter elements are mounted to a mounting arrangement in the form of a tube sheet. A mounting yoke will extend from the tube sheet and will include the threaded shaft for each of the filter elements that are mounted to the tube sheet. One intake system can have hundreds of individual filter elements.

Due to maintenance costs and the cost of downtime or periods of reduced operational output, it is valuable to limit the amount of time required to remove the old filter element and then mount the new filter element.

It is also desirable to make sure that the amount of load applied to the filter element by the attachment member is within a desired range. If the load is too big or too little, the seal between the filter element and the mounting arrangement (e.g. tube sheet) may be compromised and result in fluid leaks or premature damage to the seal allowing dirty fluid to bypass the filter element.

Additionally, the filter elements are often mounted in a cantilevered orientation with the tube sheet in a vertical orientation. Due to gravity, the cantilevered orientation can generate uneven forces on sealing elements because the sealing forces are not parallel to gravity. Instead, vertically lower portions of a seal may often have higher forces applied thereto than upper portions of the seal. This can require overloading the lower portions of the seal to get sufficient loading of vertically upper portions of the seal or under loading the upper portions of the seal when trying to obtain appropriate sealing forces for the lower portions of the seal, or a combination of both.

Also, because of how the filter elements are mounted and how closely they are positioned, it is often impossible to see the seal with the mounting arrangement to visually inspect the degree to which the seal has or seals have been compressed. This problem can be exacerbated in systems where multiple filter element sections are stacked axially relative to one another with seal members therebetween to form one larger filter element.

Further yet, it can be useful to prevent unauthorized filter elements to be used in a filter system to avoid inferior or inadequate filter elements from being employed.

In addition, due to the number of filter elements that are often employed, the filter elements are often packed close together limiting the flow space between adjacent filter elements. The applicants have determined that as filter elements are packed more tightly and closer together, the limited space therebetween can inhibit air flow upstream of the system which may increase pressure drop across the system. The applicants have determined that reducing flow disturbance and flow separation can reduce flow restriction and turbulence around and through the filter elements, and thus reduce pressure loss. This can allow for any one of or any combination of smaller filter elements, fewer filter elements, more tight packing of the filter elements, or improved pressure performance of the overall system. Reduced flow separation from the upstream surface of the filter element can also improve the full usage of all filter media of the filter elements.

The present disclosure relates to improvements over the current state of the art that can provide one or more of the following: reduced maintenance time and/or improved repeatability in applying a desired seal loading to the filter element and associated seals and/or alternative filter element spacing and/or size and design. These and other advantages of the invention, as well as additional inventive features, will be apparent from the description of the invention provided herein.

The following document may provide technical background information to the present disclosure: US2011/290116 A1.

### BRIEF SUMMARY OF THE INVENTION

New filter elements, filter mounting systems, filter systems, methods of servicing filter systems, and methods of mounting filter elements are disclosed herein.

In the present invention, a filter element including a plurality of interconnected panel sections is provided, as defined in appended claim 1. The plurality of interconnected panel sections form a tubular arrangement surrounding a central cavity. The plurality of interconnected panel sections include at least a first, a second, and a third panel section. Each panel section includes a filter media panel and a filter media panel support member. The filter media panel has an inner surface and an outer surface. The filter media panel extends laterally between first and second sides. The filter media panel support member defines a cavity receiving the filter media panel. The filter media panel support member defines a first wing portion adjacent the first side of the filter media panel and a second wing portion adjacent the second side of the filter media panel. The first wing portion of the first panel section is attached to the second wing portion of the second panel section to interconnect the first panel section to the second panel section.

In one example, for each panel section, the filter media panel support member includes an inner support and an outer support. The inner support is adjacent the inner surface. The inner support includes a first connection region proximate the first side and a second connection region proximate the second side. The outer support is adjacent the outer surface the outer support includes a third connection region proximate the first side and a fourth connection region proximate the second side. The first and third connection regions are secured to one another forming the first wing portion and secure the inner and outer supports to one another. The second and fourth connection regions are secured to one another forming the second wing portion and secure the inner and outer supports to one another. The cavity of the panel section is formed between the inner and outer supports.

In one example, for each panel section, a first portion of the filter media panel extends into the first wing portion and is sandwiched between the first and third connection regions and a second portion of the filter media panel extends into the second wing portion and is sandwiched between the second and fourth connection regions.

In one example, a clip secures the first wing portion of the first panel section to the second wing portion of the second panel section. The clip may be plastically deformable to secure the wing portions to one another.

In one example, the clip is U-shaped.

In one example, for each panel section, one of the first or second connection regions includes an outward extending section extending outward and away from the first side and the other one of the first or second connection regions includes an outward extending intermediate section and an inward extending end section. The inward extending end section is folded over the intermediate section forming a receiving slot therebetween. The outward extending section is received in the receiving slot.

In one example, for each panel section the filter media panel has a flow face extending between the first and second sides and the first and second wing portions extend outward away from the corresponding first and second sides at a non-parallel, non-perpendicular orientation relative to flow face.

In one example, for each panel section, the inner support includes a main panel that is adjacent the inner surface. The first connection region is connected to and extends at an angle relative to the main panel proximate the first side and the second connection region is connected to and extends at an angle relative to the main panel proximate the second side. For each panel section, the outer support includes a main panel that is adjacent the outer surface, a first intermediate side section adjacent the first side that extends inward from the main panel towards the inner support, the third connection region is provided by an end section that extends outward from the first side at an angle relative to the inner surface, a second intermediate side section adjacent the second side that extends inward from the main panel towards the inner support, the fourth connection region is provided by an end section that extends outward from the second side at an angle relative to the inner surface.

In one example, each panel section is generally planar (e.g. has flat front and rear faces that may have a thickness therebetween). The plurality of panel sections is greater than two and the interconnection of the panel sections forms a generally polygonal cross-sectional shape.

In one example, the inner support is a unitary one-piece construction formed from a mesh material permitting air flow therethrough. The outer support is a unitary one-piece construction formed from a mesh material permitting air flow therethrough. Typically, the mesh will have a greater porosity than the porosity of the filter media panel located between the inner and outer supports.

In one example, a first seal member is attached to a first end of the plurality of panel sections. A second seal member is attached to a second end of the plurality of panel sections. The first seal member seals a first end of each filter media panel of the plurality of panel sections and the second seal member seals a second end of each filter media panel of the plurality of panel sections.

In one example, the first and second seal members are molded to the plurality of panel sections with the filter media panels and filter media panel support members being received in the first and second seal members.

Other aspects, objectives and advantages of the invention will become more apparent from the following detailed description when taken in conjunction with the accompanying drawings.

### BRIEF DESCRIPTION OF THE DRAWINGS

The accompanying drawings incorporated in and forming a part of the specification illustrate several aspects of the present invention and, together with the description, serve to explain the principles of the invention. In the drawings:
FIG. 1 is a partial perspective illustration of a filter system according to an example of the disclosure with one filter element in a mounted state and one filter element in a removed and exploded state;
FIG. 2 is a partial cross-sectional illustration of the system of FIG. 1;
FIG. 3 is a partial cross-sectional illustration of a filter element of FIG. 1 with an attachment member in a quick mount or removal orientation;
FIG. 4 is a partial cross-sectional illustration illustrating the attachment member of FIG. 3 pivoted to a tightening orientation prior to tightening;
FIG. 5 is a partial cross-sectional illustration illustrating the attachment member of FIG. 4 tightened and compressing the compression member;
FIGS. 6 and 7 are exploded illustrations of a handle, a washer assembly, a mounting shank and an end plate of the filter system of FIG. 1 forming a filter mounting system of the filter system of FIG. 1;
FIG. 8 is a cross-sectional illustration of the handle engaged with a torque limiting component of the filter element;
FIG. 9 is a side view illustration of a handle of the filter system of FIG. 1;
FIG. 10 is a cross-sectional illustration of the handle of FIG. 9;
FIG. 11 is a cross-sectional illustration of a handle and compression member in an uncompressed state;
FIG. 12 is the handle and compression member of FIG. 11 in a compressed state;
FIG. 13 is a perspective illustration of another example of a filter element and handle;
FIG. 14 is a partial cross-sectional illustration of FIG. 13;
FIG. 15 is an enlarged partial illustration of the filter element and handle of FIG. 13 with the handle removed;
FIG. 16 is a partial perspective illustration of another example of a filter element and coupler that does not include a lever;
FIG. 17 is a partial cross-sectional illustration of FIG. 16
FIG. 18 illustrates a filter element and an end plate for securing the filter element with the end plate removed from the filter element illustrating the mating sealing features between the filter element and the end plate;
FIG. 19 is an exploded and cross-sectional illustration of an end plate removed from a filter element section;
FIG. 20 is an end view of a plurality of panel portions of a tube of filter media, in accordance with the claimed invention;
FIG. 21 is an exploded illustration of the panel portions of FIG. 20;
FIG. 22 is an enlarged cross-sectional illustration illustrating the connection of two panel portions of the tube of filter media of FIG. 20;
FIG. 23 is an exploded and cross-sectional illustration of two frusto-conical filter element sections illustrating mating sealing features thereof;
FIG. 24 is an exploded illustration illustrating filter elements spaced from a tube sheet and illustrating the tube sheet seal of the filter elements in cross-section;
FIG. 25 is an end perspective view of a filter element section and a tube sheet seal thereof;
FIGS. 26 and 27 are perspective illustrations of an adaptor that may be used with filter elements and a tube sheet that provides an outlet fairing for improving flow characteristics of an associated filter element;
FIG. 28 is a perspective illustration of a filter system including a plurality of filter elements oriented in a cantilevered orientation relative to a vertically oriented tube sheet;
FIG. 29 is a partial front view of the filter system of FIG. 28 illustrating a pair of filter elements mounted to the tube sheet;
FIG. 30 is a front view of a mounting yoke of the filter system of FIG. 28 with the filter element removed illustrating the offset orientation of the mounting shank of the mounting yoke and the curved configuration of two of the legs of the mounting yoke;
FIG. 31 is a side view illustration of the mounting yoke of FIG. 30 of the mounting yokes of the filter system of FIG. 28 with the filter element removed and illustrating how the mounting shank is offset vertically upward;
FIG. 32 is front view of an end plate for use with a filter element for securing the filter element to the mounting yoke of FIG. 30, the illustration illustrates the offset position of the mounting aperture of the end plate; and
FIG. 33 is an inner plate of the end plate of FIG. 32.

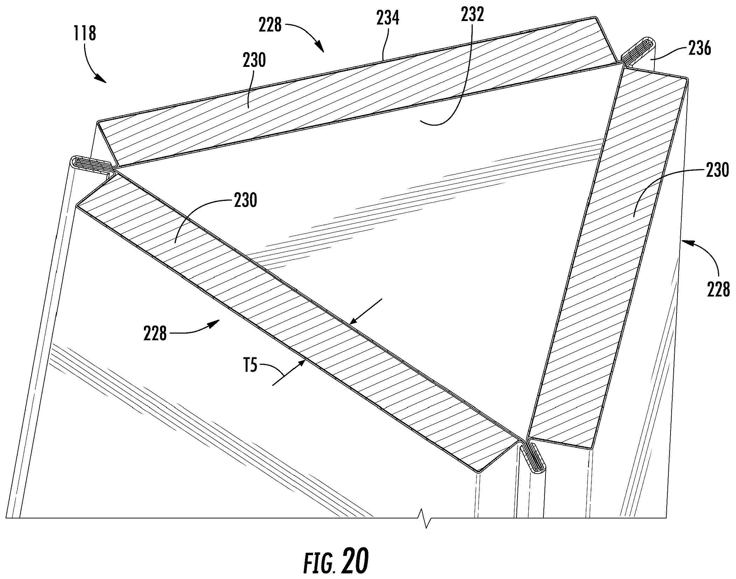

While the invention will be described in connection with certain preferred embodiments, there is no intent to limit it to those embodiments. On the contrary, the intent is to cover all alternatives, modifications and equivalents as included within the scope of the invention as defined by the appended claims. The claimed invention is illustrated primarily in FIG. 20 to 22, but the other drawings have been retained to provide background to the invention.

### DETAILED DESCRIPTION OF THE INVENTION

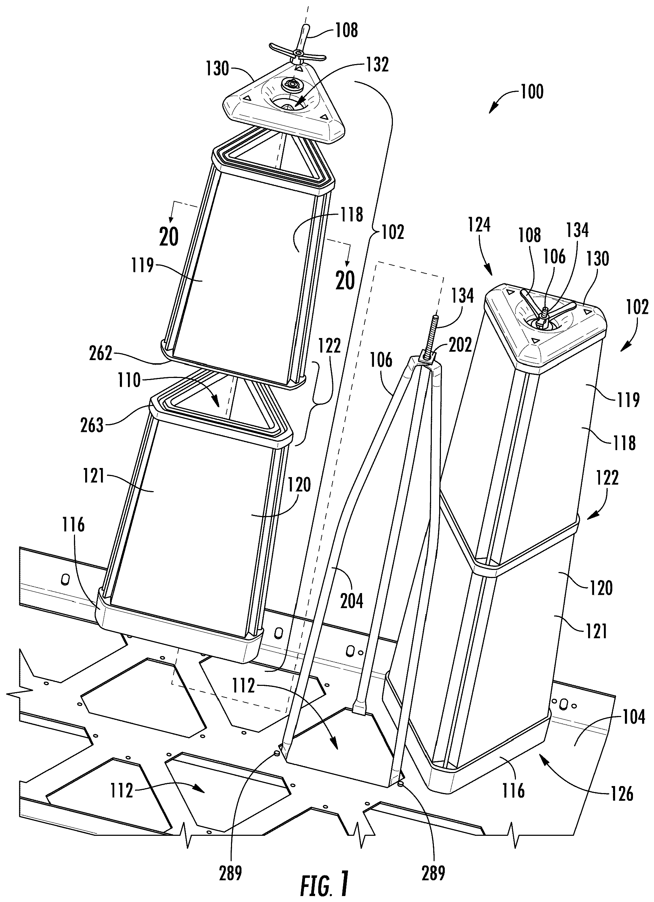

FIG. 1 partially illustrates a filtration system 100 according to a first example of the disclosure. The filtration system 100 finds particular use in high volume air filtration systems, such as in a filter house that may form the intake for a gas turbine engine. The system includes a plurality of filter elements 102 mounted to a mounting arrangement illustrated in the form of a tube sheet 104. Mounting yokes 106 (one illustrated in full detail in FIG. 1) are attached to or proximate the tube sheet 104 to secure the filter element 102 to the tube sheet 104. Attachment members, illustrated in the form of threaded handles 108, secure filter elements 102 to corresponding mounting yokes 106.

While only two filter elements 102 are illustrated, these systems will typically have many if not hundreds of filter elements 102. As such, minor improvements associated with each filter element can provide significant advantages for the overall system (e.g. improved filtration, reduced pressure drop, improved sealing or improved maintenance efficiency).

In general, the filter elements 102 are tubular defining internal cavities. When mounted, internal cavities 110 defined by the filter elements 102 are in fluid communication with flow apertures 112 extending through the tube sheet 104. A tube sheet seal 116 of the filter element 102 seals the internal cavity of the filter element 102 to the tube sheet to prevent fluid bypass between the filter element 102 and the tube sheet 104.

In the illustrated example, each filter element 102 includes a pair of filter element sections 118, 120 in a stacked orientation. Each filter element section 118, 120 includes a section of filter media 119, 121 through which dirty fluid will flow to remove particulates and/or other impurities entrained in the fluid to be filtered. In this example, the sections of filter media 119, 121 form tubes of filter media that are generally triangular in cross-section. The tubes are also generally frusto-conical such that they narrow in dimension when moving from the second end 126 toward the first end 124, e.g. away from the tube sheet 104.

In other embodiments, the tubes need not be frusto-conical and could have a constant cross-section their entire length. Further, in other embodiments, the filter element 102 could be formed from a single section. Further, other cross-sectional shapes are contemplated.

The filter element sections 118, 120 are formed from a plurality of separate filter media panels combined to form a generally triangular cross-section when viewed in a plane orthogonal to a central axis of the filter element sections 118, 120 and the frusto-conical tube. FIG. 20 is a cross-sectional illustration through filter element sections 118. As illustrated, the filter element section 118 includes three separate panel sections 228 that are interconnected to one another. The panel sections 228 are generally flat panels that have a trapezoidal outer periphery. The trapezoidal outer periphery may be viewed in FIG. 1. Typically, the trapezoidal outer periphery is an isosceles trapezoid with the parallel sides being generally parallel to the tube sheet and proximate corresponding seal members.

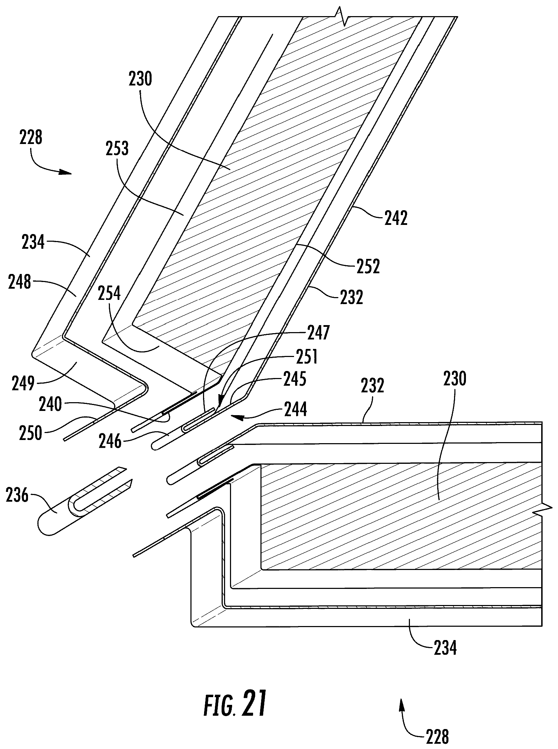

With reference to FIGS. 20 and 21, each panel section 228 includes a filter media panel 230 and a filter media panel support member that includes inner and outer mesh supports 232, 234. A clip in the form u-shaped connector 236 secures wing portions of adjacent panel sections 228 to one another.

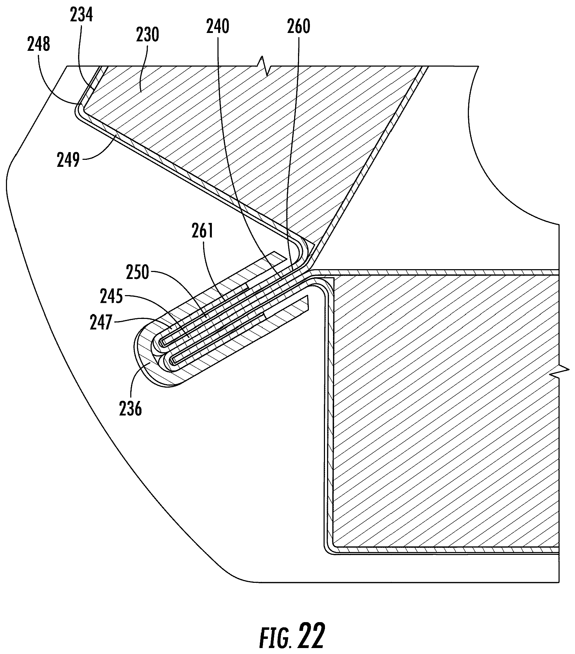

With reference to FIGS. 21 and 22, the inner and outer mesh supports 232, 234 are interfolded with one another as well as a portion 240 of the pleated filter media to secure the portions of a panel section 228 together into a single unit. The interfolding of the filter media in the wing portions also provides improved sealing between the adjacent panel sections 228.

In the illustrated example, the interfolded portions of a panel section 228 form the wing portions of each panel section 228. It is these wing portions of adjacent panel sections 228 that are then clipped or secured together using clip 236 to form the tubular filter element 102.

FIG. 21 is partial illustration of two exploded panel sections 228 and FIG. 22 illustrates two panel sections 228 after final assembly.

The inner and outer mesh supports 232, 234 wrap around to protect and support the filter media panel 230. Each side (e.g. wing portion) of each panel section 228 is a mirror image of one another so only one side (e.g. wing portion) need be described.

In this example, the inner mesh support 232 includes a main panel 242 and a connection region 244 that includes an intermediate section 245, a bend 246 and an end section 247. The intermediate section 245 extends at an angle to main panel 242 and end section 247 folds back over the intermediate section 245 by way of bend 246. This forms a receiving slot 251 between the intermediate section 245 and the end section 247.

The outer mesh support 234 has a main panel 248, an intermediate side section 249 and an end section 250. The intermediate side section 249 extends adjacent a side of the filter media panel towards the inner mesh support 232. The end section 250 extends outward from the side of the filter media and relative to the main panel 242 of the inner mesh support 232 at an angle. The end section 250 forms a connection region of the outer mesh support 234.

When assembled, the connection region of the outer mesh support 234 cooperates with the connection region 244 of the inner mesh support 232 to secure the inner and outer mesh supports 232, 234 to one another. The end section 250 of the outer mesh support 234 is received in the receiving slot 251 of the inner mesh support 232.

Main panel 242 is proximate an inner surface 252 of filter media panel 230 and main panel 248 is proximate an outer surface 253 of filter media panel 230. The main panels 242, 248 and inner and outer surfaces 252, 253 of the filter media 230 are generally parallel.

The intermediate side section 249 of the outer mesh support 234 is proximate a side surface 254 that extends between the inner and outer surfaces 252, 253 of the filter media panel 230, typically, but not necessarily, in perpendicular fashion. The side surface 254 and intermediate side section 249 are generally parallel to one another.

When assembled, intermediate section 245, end section 247 and end section 250 are generally parallel to one another. The end section 247 and end section 250 generally extend at a same angle relative to main panel 242 and inner surface 252.

With reference to FIG. 22, a first section 260 of the end portion 240 of the filter media panel 230 is captured between intermediate section 245 and end section 247 while a second section 261 of the end portion 240 is captured between end section 247 and end section 250.

Once each panel section 228 is formed, adjacent panel sections 228 are interconnected. To do this, the intermediate sections 245 of the inner mesh support 232 of each adjacent panel section 228 are positioned adjacent one another and the u-shaped connector 236 is installed to secure the folded over regions of the panel sections 228 to one another. The u-shaped connector may be crimped and plastically deformed to secure the components to one another.

In some embodiments, a sealing material may be provided between the adjacent wing portions and particularly between intermediate sections 245. The sealing material may be in the form of an adhesive. For example, hot melt or urethane, such as foamed urethane may be employed. Further yet, sealing material may be applied between the filter media and the inner and outer mesh supports 232, 234, such as between the wing portions of the panel sections 228 and the end portions 240 of the filter media. The addition of the seal material prevents or reduces leak paths.

The overlapping portions of the panel sections 228 as well as u-shaped connector provide axial rigidity to the corresponding filter element section 118, 120. The positioning of the connector 236 as well as portions of the mesh supports 232, 234 provide a high stiffness-to-weight ratio, which prevents the need for standalone structural members to accommodate the axial compression forces required for mounting and/or sealing to the tube sheet 104.

Once the panel section sections 228 are interconnected, various seals or other components forming the ends of the filter element sections 118, 120 may be attached or molded thereto.

In some embodiments, the mesh supports 232, 234 are formed from steel mesh. The u-shaped connector 236 may be formed from extruded metal and particularly extruded steel.

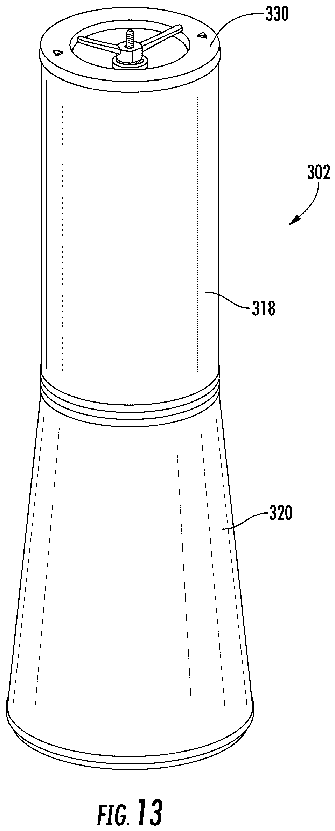

Further, other cross-sectional shapes are contemplated such as circular, rectangle, etc. Some particular benefits may be provided for some shapes that are not provided for other shapes. In FIG. 13, a filter element 302 is provided with filter element sections 318, 320 having circular cross-sectional shapes. The first filter element section 318 has a constant outer diameter from one end to the other while the second filter element section 320 has a frusto-conical configuration.

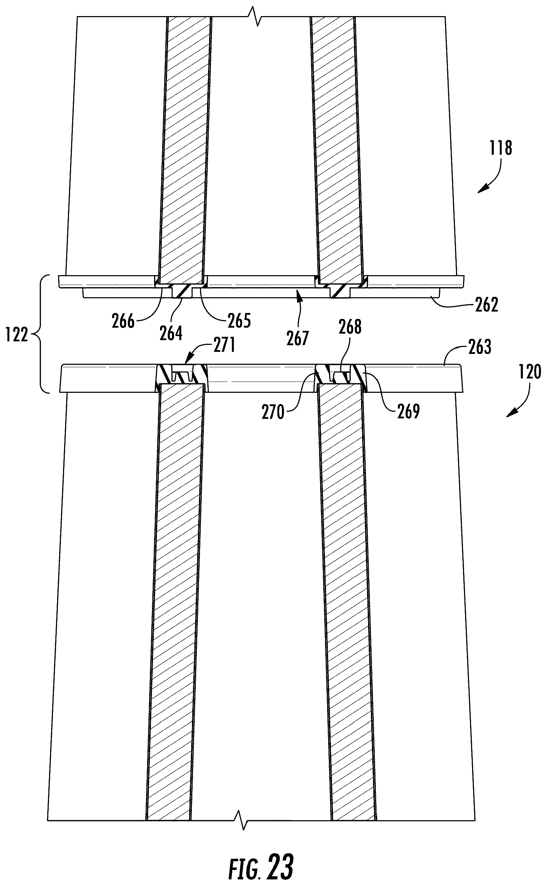

With reference to FIGS. 1 and 23, a mating seal arrangement 122 is provided between the stacked filter element sections 118, 120 to prevent fluid bypass. While not required, in some examples, clocking features are provided to properly angularly orient the stacked filter element sections 118, 120 and/or prevent relative angular motion therebetween. In this example, the clocking features are incorporated into the shape and profile of the mating components of the mating seal arrangement 122.

Further yet, in other embodiments, the stacked filter element sections may be clocked directly to the tube sheet 104. For example, mating projections and recesses provided by the filter element section 120 and/or the tube sheet 104 could be provided. Further, non-circular shapes of the filter element could be used in conjunction with projections or recesses formed in the tube sheet 104 for clocking purposes. A separate clocking adaptor could be attached to the tube sheet 104 or the mounting yoke 106 for clocking of the filter element sections 118, 120. It is contemplated that round filter element sections 118, 120 could be clocked as well. In such an instance, the clocking features could be provided on the axial ends or project radially outward from the associated seals or endcaps (if provided).

Further, the triangular shape of the mounting yoke 106 also clocks the filter elements 102 relative to the tube sheet 104 and mounting yoke 106 in the illustrated example.

While this example illustrates stacked filter element sections 118, 120, other filter elements may incorporate only a single section or more than two sections.

The filter elements 102 extend longitudinally between first and second ends 124, 126. One end is provided by each of the filter element sections 118, 120 in this example.

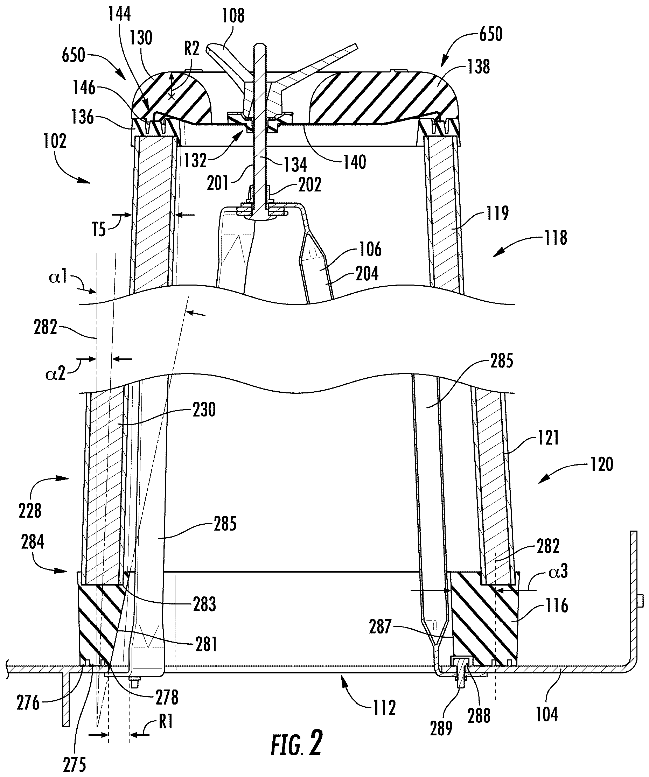

With reference to FIGS. 1 and 2, at the first end 124, an end plate 130 is provided. The end plate 130 includes an end plate aperture 132 (also referred to herein as a "mounting aperture"). A threaded shank 134 of the mounting yoke 106 operably extends through the end plate 130 and particularly end plate aperture 132 when the filter element 102 is mounted.

The end plate 130 in this example is reusable and is not permanently attached to the filter element 102 (e.g. permanently attached to either filter element section 118 or 120). In other words, either filter element 102 or the end plate 130 is not damaged when the two components are separated. Instead, an end plate seal 136 is provided by first filter element section 118 and cooperates with the end plate 130 so that the end plate 130 is removably sealed to the first filter element section 118 when the filter element 102 is mounted.

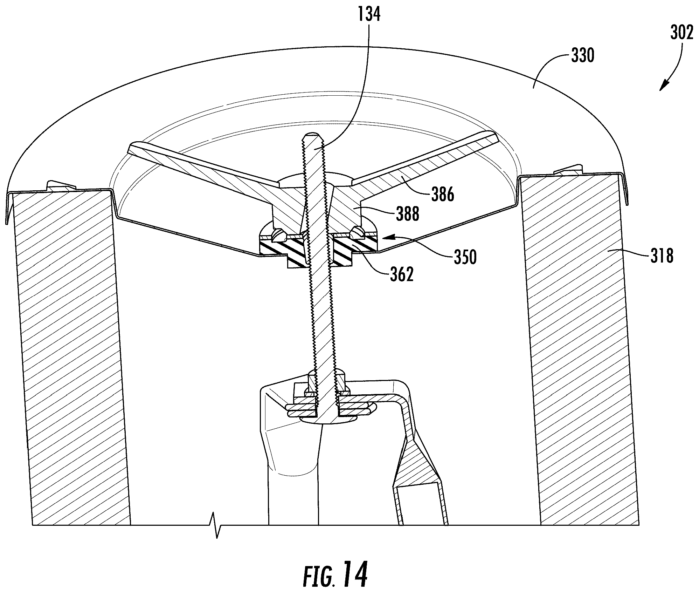

With reference to FIGS. 13 and 14, in other embodiments, the end plate 330 may be permanently attached to the filter media of the filter element 302. For example, the end plate 330 could be permanently attached to the filter media of first filter element section 318 and the end plate can form an end cap for that end of the first filter element section 318.

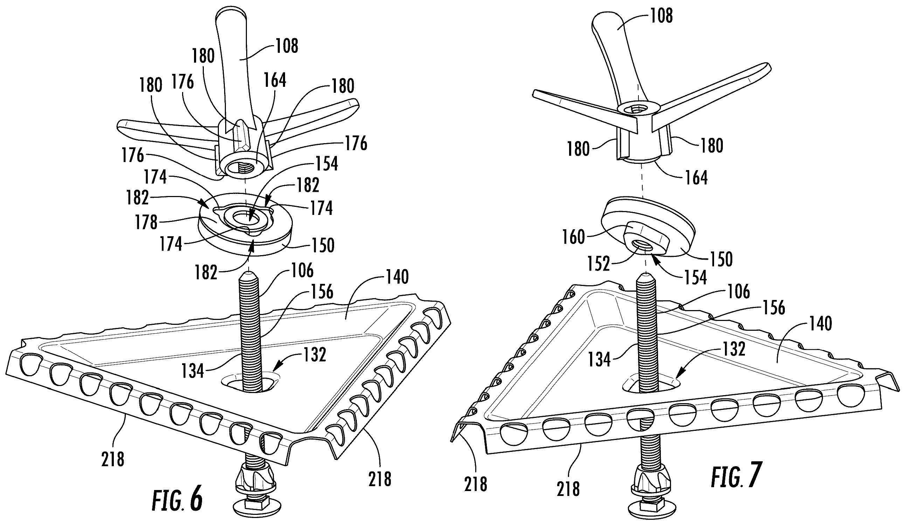

With reference to FIG. 2 and the embodiment therein, the end plate 130 is formed from a plurality of components. The end plate 130 includes an outer shell 138 and an inner plate 140. The inner plate 140 is partially embedded in the outer shell 138. The outer shell 138 may be molded to the inner plate 140. The inner plate 140 optionally includes through holes (see e.g. FIGS. 6 and 7) to allow material of the outer shell 138 to pass therethrough during molding of the outer shell 138 to the inner plate 140 and improve engagement therebetween. In some instances, the outer shell is a urethane and is molded in a molten state. In some embodiments, the end plate 130 is a single piece continuous component.

In an example, the inner plate 140 is formed from metal, such as stamped metal while the outer shell 138 is formed from plastic or rubber. In one example, the outer shell may be formed from polyurethane. However, in other arrangements, the outer shell 138 or inner plate 140 may be formed from plastics. Further yet, in some arrangements, the outer shell 138 is entirely eliminated and only the inner plate 140 is provided.

In some examples, the end plate seal 136 could be formed by the outer shell 138 or the end plate. In further examples, the end plate seal 136 may be entirely independent of the end plate 130 or the filter element 102.

In this example, the inner plate 140 provides increased rigidity to the end plate 130 and allows for transmitting axial loading provided by the handle 108 to the filter element sections 118, 120 to press the tube sheet seal 116 against a sealing surface of the tube sheet 104 surrounding flow aperture 112. This force can also compress other axial seals within the arrangement.

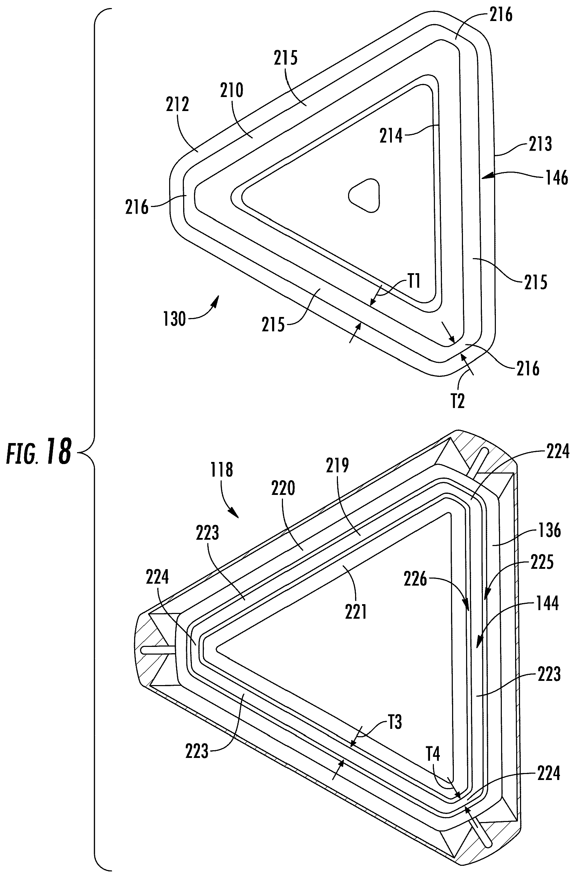

Clocking features between the end plate 130 and the first filter element section 118 are provided. In this example, the clocking features are provided by a mating groove 144 and projection 146 provided by end plate 130 (e.g. outer shell 138) and end plate seal 136 (see also FIG. 18 for these features). These components could be flipped in other embodiments. Further, other clocking features could be provided such as a plurality of separate projections and recesses that can be provided either or both of the mating components. Further yet, the general shape of the filter element (e.g. the triangular periphery in this example) could be used to clock the components relative to one another.

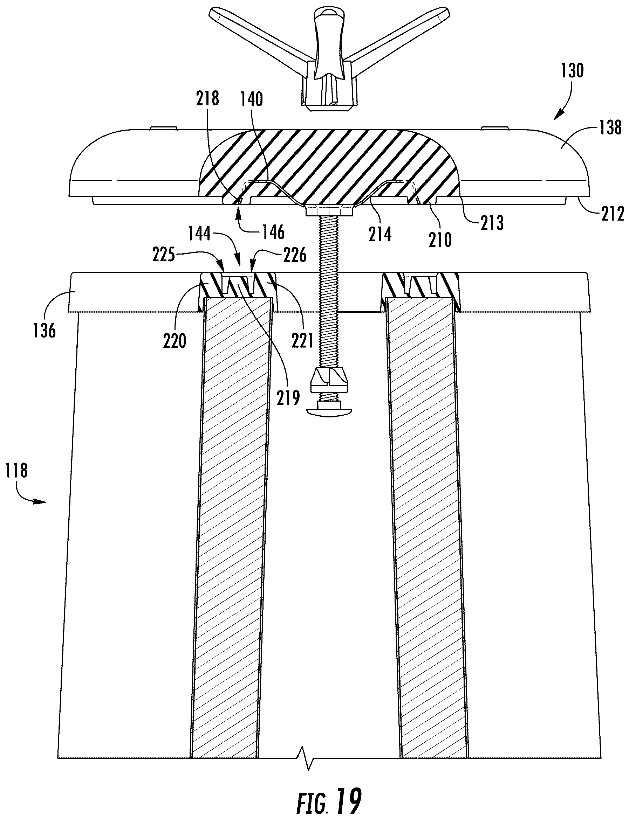

With reference to FIGS. 18 and 19, the seal between the end plate 130 and the end plate seal 136 is described in more detail. The projection 146 of end plate 130 provides a first sealing rib 210 that projects axially from a body of the end plate that provides outward facing surface 212. The first sealing rib 210 is generally annular and forms a gasket. Notably, something that is annular need not be circular and could have other peripheral shapes. In this example, the first sealing rib 210 is generally triangular. The first sealing rib 210 is spaced radially inward from outer edge 213 and radially outward from inner edge 214. The inner edge 214 is where the surface 212 meets an inner portion if inner plate 140. As such, there is a portion of surface 212 radially outward of sealing rib 210 and radially inward of sealing rib 210.

Again, the sealing rib 210, in this embodiment, is annular and triangular in shape and thus has three sides illustrated as generally straight sections 215 with adjacent straight sections 215 interconnected by a corresponding corner portion 216.

The straight sections 215 have a thickness T1 that is generally greater than a thickness T2 of the corner portions 216.

As illustrated in FIG. 19, the inner plate 140 has outward extending flange portions 218 that extend generally along each side of the triangular periphery of the inner plate 140 and end plate 130. In this example, the flange portions 218 extend axially into the first sealing rib 210 and outward beyond outward facing surface 212. This allows the inner plate 140 and particularly the flange portions 218 to provide increased rigidity to the first sealing rib 210.

In this embodiment, the end plate seal 136 is molded to the filter media of first filter element section 118. The end plate seal 136 has cooperating structure that cooperates with the first sealing rib 210 and the outward facing surface 212 of the end plate 130.

With principle reference to FIG. 18, the end plate seal 136 has a second sealing rib 219 that is annular and triangular in shape when viewed in a plane generally orthogonal to a central axis of the filter element section. The triangular shape has straight sections 223 interconnected by corner portions 224. The annular configuration of second sealing rib 219 forms a gasket. The shape and size of the second sealing rib 219 coordinates with the shape and size of the first sealing rib 210 to provide a primary seal interface between the first and second sealing ribs 210, 219 when in an installed state.

With reference to FIGS. 18 and 19, a pair of shoulders 220, 221 straddle the second sealing rib 219. Shoulder 220 is radially outward of the second sealing rib 219 while shoulder 221 is radially inward of second sealing rib 219. The shoulders 220, 221 extend axially outward, e.g. away from the filter media of the first filter element section 118, farther than the second sealing rib 219. This forms groove 144 identified above in the outward facing end of the end plate seal 136.

In this example, the second sealing rib 219 is fully recessed relative to shoulders 220, 221. The groove 144, in this example, is annular.

Thus, in this example, the end plate seal 136 may be considered a female component while the end plate 130 may be considered male component. Again, this arrangement can be reversed in other examples.

The first and second shoulders 220, 221 are radially spaced from the second sealing rib 219 such that channels 225, 226 are formed therebetween. Channels 225, 226 are annular and have a triangular shape. Preferably, the adjacent walls of the shoulders 220, 221 and the second sealing rib 219 are tapered relative to one another such that the channels 225, 226 get wider when moving axially away from the filter media of the first filter element section 118.

In this example, with reference to FIG. 18, the straight sections 223 have a thickness T3 that is greater than thickness T4 of the corner regions 224. Further, in some, but not all, embodiments, the thickness T1 of rib 210 in the straight portions 215 is greater than corresponding thickness T3 while thickness T2 of corner portions 216 is greater than corresponding thickness T4. The smaller thickness T4 in the corner regions 224 relative to thickness T3 allows reduced localized axial clamping force to sufficiently compress the sealing rib 219 in the corner regions 224 and prevent dirty fluid bypass.

When assembled, such as illustrated in FIG. 2, a primary seal that is axially oriented is formed between the first and second sealing ribs 210, 219. The outer shoulders 220, 221 will axially abut the outer and inner portions of outward facing surface 212 and provide a gasket stop as well as provide secondary sealing functionality. The abutment of shoulders 220, 221 with outward facing surface 212 also provides increased stability at the interface between the end plate 130 and end plate seal 136.

In one example, the first sealing rib 210 extends axially from the outward facing surface 212 a greater distance than the second sealing rib 219 is recessed inward relative to the shoulders 220, 221. This allows the sealing ribs 210, 219 to axially engage prior to the shoulders 220, 221 engaging surface 212. Thus, during assembly, one or both of the sealing ribs 210, 212 will axially compress prior to engagement between the shoulders 220, 221 and surface 212. As such, when the user is tightening the end plate 130 against the first filter element section 118, significant tactile feedback will occur once the end plate 130 is fully seated against the first filter element section 118 and particularly against the end plate seal 136.

The triangular shape of the sealing rib 210 and groove 144 clock the end plate 130 to the end plate seal 136 to clock the end plate 130 to the filter element section 118.

With reference to FIGS. 1 and 23, the configuration of the mating seal arrangement 122 between the first and second filter element sections 118, 120, is the same configuration as between the end plate 130 and the end plate seal 136. The seal arrangement 122 includes a first seal member 262 that mates with a second seal member 263.

The first seal member 262 is provided by the first filter element section 118 and the second seal member 263 is provided by the second filter element section 120. The first seal member 262 has the same mating structures as those provided by end plate 130 discussed previously. More particularly, first seal member 262 includes sealing rib 264 and adjacent surfaces 265, 266.

However, unlike the end plate 130, which is generally impermeable because it closes off the end of the filter element 102 by closing off the end of filter element section 118, the first seal member 262 is annular and has opening 267 to permit fluid flow between the interior cavities formed by filter element section 118 and filter element section 120.

The second seal member 263 is substantially the same as end plate seal 136 except it may be dimension differently due to the frusto-conical configuration of filter element 102. The second seal member 263 includes seal rib 268, shoulders 269, 270 and recess 271 that forms an annular groove.

This seal arrangement 122 and the cooperating axially abuting ribs, shoulders and surfaces provides improved stability as noted above between the end plate 130 and end plate seal 136.

It is noted that while the first seal member 262 is illustrated as being the male component and the second seal member 263 is illustrated as being the female component, these configurations could be reversed.

The mating relationship between the first and second seal members 262, 263 clocks the filter element sections 118, 120 to one another.

The male components, e.g. end plate 130 and first seal member 262, are typically formed from a more rigid material than the female components, e.g. end plate gasket 136 and second seal member 263. This allows for more predictable deformation of the components of the seal arrangements. More particularly, the less rigid sealing ribs of the female components will compress first/prior to the more rigid sealing ribs of the male components. In some embodiments, the sealing ribs of the female components are configured to compress about one-half of their axial height when the cooperating components are properly axially engaged with one another after assembly. This better ensures that a predetermined amount of axial compression is applied to the sealing rib of the female component.

Tactile feedback can be provided to the operator because once the sealing ribs properly compress, the shoulders will then abut the cooperating surfaces of the other component providing an increase in resistance to further compression of the seal arrangement. The shoulders will thus operate as a gasket stop informing the user of when appropriate pressure has been reached and/or inhibit over compression of the seal ribs.

At the end of the second filter element section 120 opposite second seal member 263 is tube sheet seal 116. The tube sheet seal 116 includes a sealing rib 275 that is straddled by shoulders 276, 278. The sealing rib 275 is separated from shoulders 276, 278 by channels 279, 280. Again, similar to seal ribs 210, 219 above, when appropriate amount of axial compression is applied to tube sheet seal 116, seal rib 275 will be sufficiently compressed and the shoulders 276, 278 will abut tube sheet 104 and act as a gasket stop inhibiting further compression, e.g. over compression, of the seal rib 275.

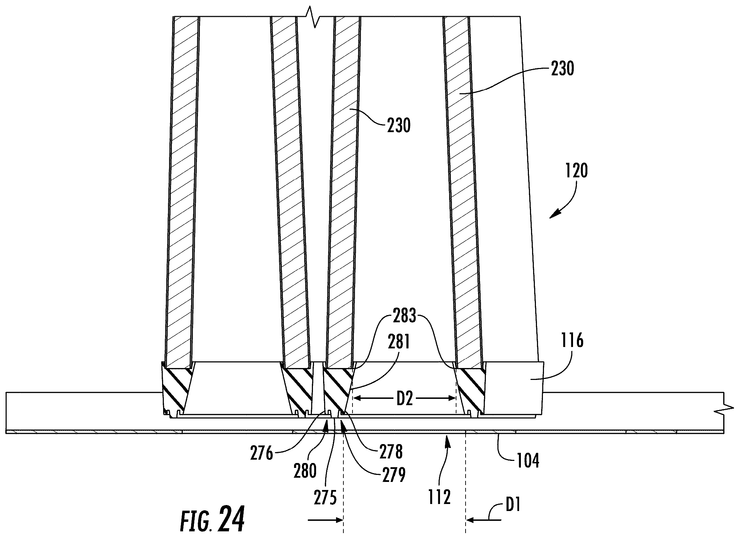

Unlike the other sealing ribs 210, 219, sealing rib 275 projects axially outward beyond the end of should 276, 278. This is because the cooperating seal surface of the tube sheet 104 is generally flat (see e.g. FIG. 24).

However, it is contemplated that the sealing rib 275 could be recessed and the tube sheet 104 could provide a corresponding axial projection. This could also further facilitate clocking of the filter element 102 and particularly tube sheet seal 116 to the tube sheet 104.

As illustrated in FIGS. 2 and 24, the radially inward facing surface 281 of the tube sheet seal 116 is tapered radially inward when moving axially away from the tube sheet 104. Notably, the angle α1 of surface 281 from an axis 282 orthogonal to the tube sheet 104 is typically greater than angle α2 of the angular relationship of the sides of the filter element section 120 to axis 282. Angle α2 corresponds to the angle of the inner surface of the panel section 228 (e.g. the inner surface of the inner mesh support or the inner surface of the filter media) relative to axis 282. Axis 282 is typically parallel to a central axis of the filter element 102.

In the illustrated example, the tube sheet seal 116 and the flow apertures 112 are configured such that inner edge 283 of the end 284 of the filter media panel 230 closest the tube sheet 104 is spaced radially inward of the corresponding side of the aperture 112 illustrated by space R1 in FIG. 2. This applies for all three sides of the filter element 102. As illustrated in FIG. 24, the dimension D1 of the aperture 112 is thus greater than dimension D2 formed between opposed inner edges 283 of the end 284 of the filter media panels 230.

The inclusion of tapered surface 281 provides a fairing at the outlet from the interior cavity of the filter element 102. This arrangement provides some static pressure recovery. The different angles and particularly more tapered magnitude of angle α1 improves the recovery of static pressure. In a preferred example angle α1 will be at least 5 degrees but less than 30 degrees. This tapered arrangement allows the flow exiting the filter element 102 to diffuse before reaching the tube sheet aperture 112. This also reduces the extent of any wake in the air flow exiting the filter element and tube sheet 104. This provides an associated reduction in total pressure loss across the filter element 102.

This results in a filter element with a lower pressure loss for a given airflow, or higher air flow for a given pressure drop. This can provide benefits including, but not limited to, use of fewer filter elements, higher efficiency media which can provide longer life to downstream components, higher output by downstream components (such as turbines) or longer filter life by allowing for a larger degree of pressure drop due to increased amount of loading of impurities filter from the air flowing through the filter media.

By reducing the pressure losses associated with the system, air flow through the filter system can be increased, thus allowing for a reduced number of filter elements 102 required for a given air flow rate.

The inner surface 287 of the tube sheet seal 116 within the corner region has an angle α3 (see Fig. 2) that is more parallel to axis 282 than angle α1. This angle α3 is configured to promote a snug fit engagement of the corner regions of the inner surface 287 with the legs 285 of the yoke 106. This promotes proper alignment (i.e. clocking) of the filter element section 120 relative to aperture 112. In some embodiments, the corner regions form sweeps or pockets that receive and wrap around the legs of the yoke 106 when mounted.

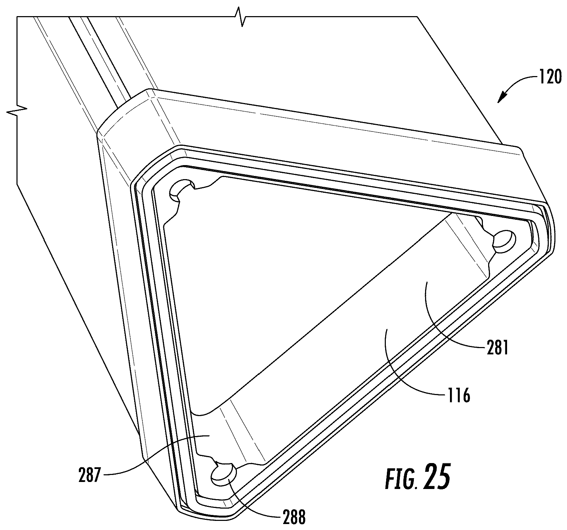

With reference to FIGS. 2 and 25, the tube sheet seal 116 includes pockets 288 for receiving the yoke bolts 289 in each corner. In this example, the pockets 288 receive the heads of yoke bolts 289. By capturing the heads of the yoke bolts 289 within the pockets 288, the tube sheet seal 116 inhibits back driving of the yoke bolts 289 in use.

In FIGS. 2 and 24 the tapered region (e.g. surface 281) is provided by the tube sheet seal 116 that is integrally formed with the rest of the filter element section 120, e.g. molded directly to or adhesively secured directly the panel sections 228.

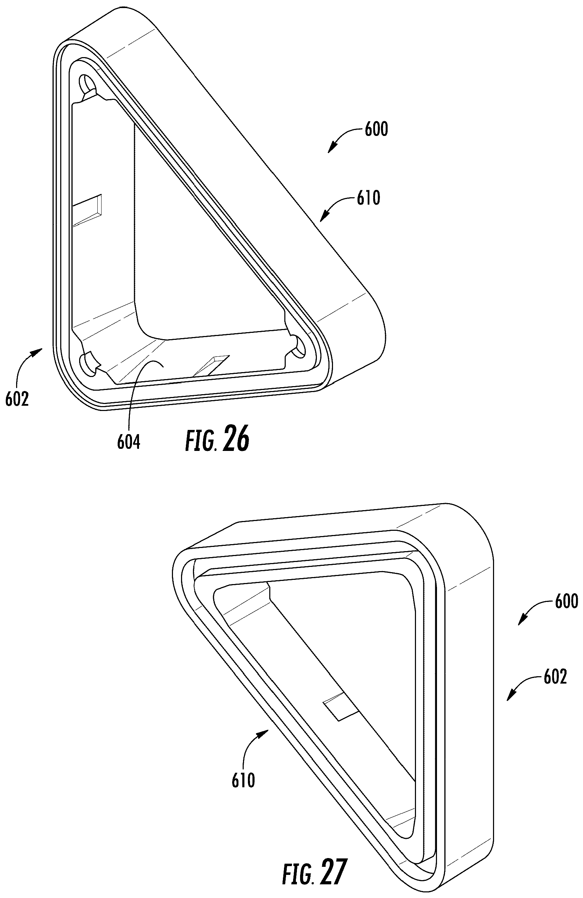

With reference to FIGS. 26 and 27, in alternative embodiments, a tapered outlet adapter 600 could be provided.

The outlet adapter 600 has a tube sheet end 602 that is substantially identical to the outlet end of the tube sheet seal 116 described previously. As such, the tube sheet end 602 may include a sealing rib one or more shoulders that act as a gasket stop as well as pockets for receiving yoke bolts 289. Further yet, the adapter 600 may have tapered inner surface 604. However, in this example, the adaptor is a separate component from the rest of filter element 102. This adaptor may be reusable with other filter element sections.

A filter element end 610 of the adaptor 600 would be configured similar to second gasket 263 described previously and would be configured to mate with a seal of a corresponding filter element/filter element section that is similar to first seal member 262 provided by the filter element/filter element section.

In other examples, the streamlined fairing, e.g. tapered surface 604, could be provided by a component that forms part of the tube sheet 104. For example, the adaptor 600 could be incorporated into or permanently secured to the tube sheet 104.

The adaptor 600 may be molded, pressed metal, 3-d printed, a polymer molding or co-molding with a metal insert.

When the adapter 600 is a separate component, the corners of the adaptor 600 may be configured similar to corner regions of the tube sheet seal 116 and provide a snug fit arrangement with legs 285 of the filter mounting yoke 106.

For pleated filter media, media permeability, overall media area, pleat size and spacing all influence the pressure loss across the media pack and hence the relative distribution of pressure losses between the media pack and filter framework. For the same filter element topology, but different media packs, different adapters/fairings may be supplied or attached to the filter element, with varying lengths, inlet or outlet areas, depending on whether lower cost, lower pressure loss, or increased media area are desired. For example, a cartridge filter with a deeper media pack and an adapter would have the same outlet aperture, and therefore, similar outlet pressure loss, as a filter with a shallower media pack, and could utilize the same mounting arrangement inside the filter system.

While the adaptor is shown in use with a triangularly shaped filter element, the adaptor concept is equally applicable to filters of different shapes, such as, without limitation, round or square cross-section filter elements.

In addition to the outlet end of the filter elements 102 having pressure reduction features, e.g. the tapered inner surfaces of either the seal member 116 that cooperates with the tube sheet 104 or the adapter 600, the end plate 130 includes pressure reduction features. Again, reduced pressure loss for the air flowing the system can provide one or more of the benefits mentioned above as it relates to air flow through the system.

As filter elements 102 are positioned closer together to reduce the size of the filter house, increase the number of filter elements in a filter house, or a combination of both, the filter framework and components of the system can disrupt the air flow approaching the filtration media creating drag and leading to increased pressure loss.

As such, an end face of the end plate 130 includes fairing features on the radial outer most periphery to help reduce disturbance to the incident airflow at the upstream end of the filter element 102, e.g. the end spaced away from tube sheet 104. Flow separation from this peripheral edge is reduced or eliminated and flow entering the passage between two adjacent filters will have a lower, more uniform velocity. This reduces drag as well as allows the air flow to more effectively use and pass through the filter media proximate the end plate 130 rather than flowing around the end plate 130 and then first coming into contact with the filter media at a location spaced away from the end plate 130 and closer to the tube sheet 104. This increases the amount of useable surface area of the filter element 102 thereby reducing pressure drop across the filter element 102 as well as the service life of the filter element 102.

With reference to FGS. 2 and 3, in one example, the fairing of the end plate 130 is a curved profile incorporated into the outer periphery of the end plate 130 such as illustrated proximate arrows 650. In the illustrated example, the curved profile 650 is provided by a half round but could take other shapes such as quarter round curved profile. In this example, the radially outer portion of the half round may be the only functional portion of the half round profile. The curved profile need not have a constant radius of curvature. Further, it could be different than 180 degree (half round) or 90 degree (quarter round) profiles as mentioned above.

In a preferred example, the radius of curvature R2 of the curved profile 650 is at least 25% of the shortest distance between the edge of the end plate and its centroid, more preferably at least 30% of this distance. The larger the radius of curvature R2 the reduced amount of disturbance that occurs to the airflow as it flows around the curved profile 650 of the end plate 130 by providing a smaller rate of change in the flow direction.

The centroid may or may not go through the center of the mounting aperture through the end plate.

The curved profile 650 preferably extends radially outward to the upper most outer edge 652 of the panel section 228 and radially inward as illustrated by radial dimension R3 at least 25% of the shortest distance between the edge of the end plate 130 and its centroid, more preferably at least 30% of this distance.

The radius of curvature R2 of the curved profile 650 is also preferably at least 12% and ideally 25% of the distance between the outermost edge of end plate 130 and the parallel edge of end plate on the next adjacent filter.

Preferably, the curved profile 650 is also at least a quarter round such that the curved surface extends at least 90 degrees if it has a constant radius of curvature.

In some examples, the axial height H1 of the curved profile 650 is at least 25% of thickness T5, more preferably at least 50% of thickness T5.

The curved profile 650 can be provided by a removable/reusable end plate 130 such as the end plate 130 illustrated in FIGS. 2-4, or could be formed by an end plate that is permanently attached to the filter element 102 such as by way of being adhesively secured or molded to the rest of the filter element 102. In the illustrated example, the curved profile 650 and associate fairings provided thereby are formed by the outer shell 138 of the end plate 130.

The curved profile could be provided by a fabricated component, a pressed metal part, a 3-d printed part, a polymer molded part, a component co-molded with a metal insert.

The inlet fairings may have cut-outs, or recesses to facilitate mounting and securing of the filter in a holding frame or to yoke 106. Where fairings are separate components that are reusable, they may include seals or gaskets on mating surfaces.

With reference to FIGS. 2-5, a compression member 150, illustrated in the form of a washer, is interposed between the handle 108 and the end plate 130. In this example, the compression member 150 is also interposed between the end plate 130 (particularly the inner plate 140) and the threaded shank 134 of the mounting yoke 106.

The compression member 150, of this example, provides a first function of sealing the end plate 130 to the threaded shank 134 of the mounting yoke 106 to prevent dirty fluid bypass through the end plate aperture 132. More particularly, the compression member 150 includes a seal region 152, which may be referred to or provided as a separate seal. With additional reference to FIGS. 6 and 7, the seal region 152 is a helical wiper seal on an inner diameter of a bore 154 also referred to as a compression member aperture through the compression member 150. The helical wiper seal is sized and configured to mate with the external threads 156 of the threaded shank 134. Thus, the seal region 152 is generally a threaded structure with several threads that mate with and are similar to the threads 156 of threaded shank 134.

In one example, the helical wiper seal (e.g. threads of the compression member 150) may be sized smaller than normal mating threads that would otherwise mate with threads 156 to promote improved sealing between the seal region 152 and threaded shank 134. In one example, the helical wiper seal is sized to engage with the minor diameter of the threads of the threaded shank 134 but have an increased major diameter, thereby increasing compliance and allowing them to bend and not shear when the threaded shank 134 is passed through the inner diameter of bore 154.

In other examples, the inner diameter of the seal region 152 may be sized such that it simply deforms into threads 156 to effectuate the seal with shank 134.

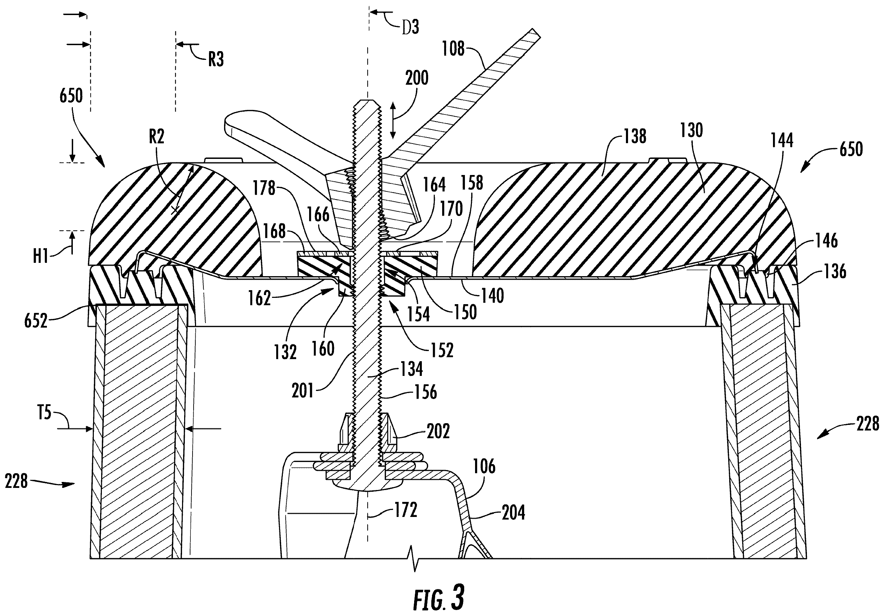

In addition to sealing to threaded shank 134, the compression member 150 seals with the end plate 130. In this embodiment, the seal provided therebetween may be both an axial seal of the compression member 150 being pressed against an outer surface 158 of inner plate 140 as well as a radial seal between the portion of inner plate 140 forming end plate aperture 132 and an alignment projection 160 (see e.g. FIGS 3 and 7) of the compression member 150 that extends through end plate aperture 132.

In addition to the sealing function, axial load to secure the filter elements 102 to the tube sheet 104 with good sealing engagement between tube sheet seal 116 and tube sheet 104 is transmitted from the handle 108 to the end plate 130 through the compression member 150.

In one example, the compression member 150 is configured to provide torque identification and/or limiting that either or both of identifies when sufficient load is applied to the filter element 102 from handle 108 or/and prevents over loading the filter element 102 by over torqueing handle 108.

More particularly, the compression member 150 includes a compression region 162. The handle 108 and particularly an axial pressure region 164 thereof presses on the compression region 162 when the handle is rotated to tighten the handle 108 against the filter element 102.

In one example, a desired amount of axial load is used to press the tube sheet seal 116 against the corresponding sealing surface of the tube sheet 104 (see e.g. FIG. 2). Over tightening of the handle 108 can over compress tube sheet seal 116 leading to potential failure of the tube sheet seal 116 or other components of the filter element 102. Under tightening can provide improper seating of the filter element and allow leak paths.

However, as the tube sheet seal 116 may not be visible when mounting the filter element due to the size of the filter elements 102 and the arrangement of the filter elements 102 on tube sheet 104, the compression member 150 can provide a cue as to when the desired load is being applied by handle 108. Other cues are outlined below.

The compression region 162 is configured to compress once the desired load is applied by the handle 108 to the compression member 150. Thus, the user may be able to visually see the compression of the compression member 150, such as in the compression region 162, and determine that sufficient axial load is being applied.

In one example, the tube sheet seal 116 is has a first minimum axial load required to provide a desired seal with the tube sheet 104. The compression region 162 begins to compress under a second minimum axial load that is greater than the first minimum axial load. As such, the compression region 162 will not begin to compress, at least in a significant manner (e.g. less than 20%), until sufficient loading has been applied to the tube sheet seal 116. As such, if the user has not seen evidence of compression of the compression member 150, such as at the compression region 162, the user would know that insufficient force is being applied to the filter element and particularly to tube sheet seal 116.

In one example, the tube sheet seal 116 is configured (e.g. size, shape, material properties, etc.) such that it will deform at loading less than the second minimum axial load such that it will deform prior to the compression region 162 deforming due to loading provided by handle 108.

In some examples, the tube sheet seal 116 is formed from a material that is softer than the material used to form the compression member 150 and particularly the compression region 162, thereof. For example, the durometer of the compression region 162 may be greater than the durometer of the tube sheet seal 116.

In the illustrated example, first and second washer members 166, 168 are attached to the compression member 150. The first washer member 166 is positioned radially inward of the second washer member 168. In this example, the first and second washer members 166, 168 are discrete members formed from separate bodies of material such that the two components are not formed into a single continuous piece of material. The washer members 166, 168 could be formed from metal, such as steel or aluminum or from a plastic that is preferably more rigid than the material of the compression member 150.

The first washer member 166 is aligned with the compression region 162. As such, the first washer member 166 and compression region 162 have a similar radial spacing from the central axis 172 of the bore 154. This central axis 172 is also coincident with the central axis of threaded shank 134.

The handle 108, and particularly, axial pressure region 164 axially presses against and angularly slides on the outer face 170 of the first washer member 166 when the handle 108 is being tightened to secure the filter element 102 against the tube sheet 104 so as to apply loading to the compression region 162 and the compression member 150.

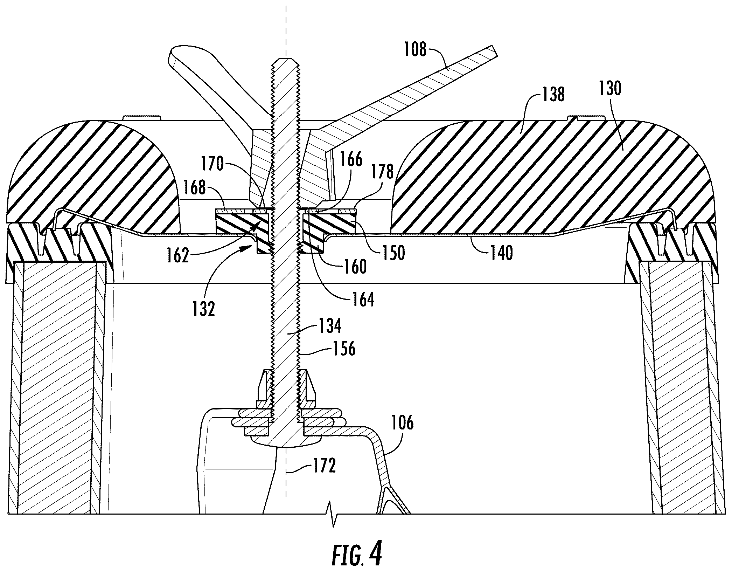

The transition from FIG. 4 to FIG. 5 illustrates the compression of compression region 162 as the handle 108 is rotated to tighten the filter element 102. As illustrated in FIG. 4, the compression member 150 and the compression region 162 are in an undeformed state with the handle axially pressing against the outer face 170 of the first washer member 166.

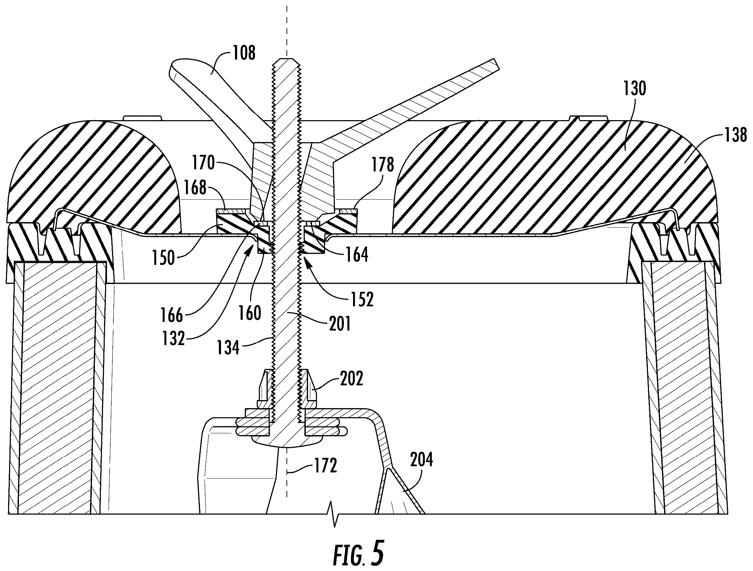

As the user rotates the handle 108 to tighten the assembly, the compression member 150 and compression region 162 thereof compress and deform. This is illustrated in FIG. 5. Notably, during this process, the first washer member 166 becomes axially displaced relative to the second washer member 168. This provides an initial visual identification that the desired amount of axial load is being approached. Further, in some embodiments, the compression region 162 is configured such that at the onset of axial displacement of the compression region, torque feedback to the installer should also increase.

The second washer member 168 functions to prevent over tightening the handle 108 to prevent overloading the filter element 102 and particularly any of the seals therein and more particularly the tube sheet seal 116.

The second washer member 168 defines a plurality of first angular catches 174. These angular catches 174 are radially offset from the center of the end plate aperture 132 (e.g. offset from axis 172). These angular catches 174 define abutments that will engage and inhibit rotational motion of handle 108 once sufficient loading has been applied.

The handle 108 includes a plurality of second angular catches 176 that will angularly abut the first angular catches 174 to prevent continued angular rotation of handle 108. The second angular catches 176 are axially offset from the axial pressure region 164 of the handle 108. Thus, when the handle 108 initially abuts the top surface 170 of the first washer member 166 as illustrated in FIG. 4, the second angular catches 176 are axially offset from the first angular catches 174 such that the catches 174, 176 will not abut or inhibit angular rotation of the handle 108.

Other axial offset orientations are contemplated. For example, washer members 166, 168 could be axially offset rather than axial pressure region 164 and second angular catches 176. Alternatively both the washer members 166, 168 and the axial pressure region 164 and second angular catches 176 could be axially offset.

As the load increases due to increased tightening of handle 108, the compression region 162 compresses independent of or at a greater rate than the portion of compression member 150 proximate the second washer member 168. As such, the axial spacing/offset between the first angular catches 174 and the second angular catches 176 reduces as the load increases. Once a desired amount of load is present, the compression region 162 will be sufficiently compressed that the first and second angular catches 174, 176 can abut when angularly aligned. In this condition, continued rotation will be inhibited.

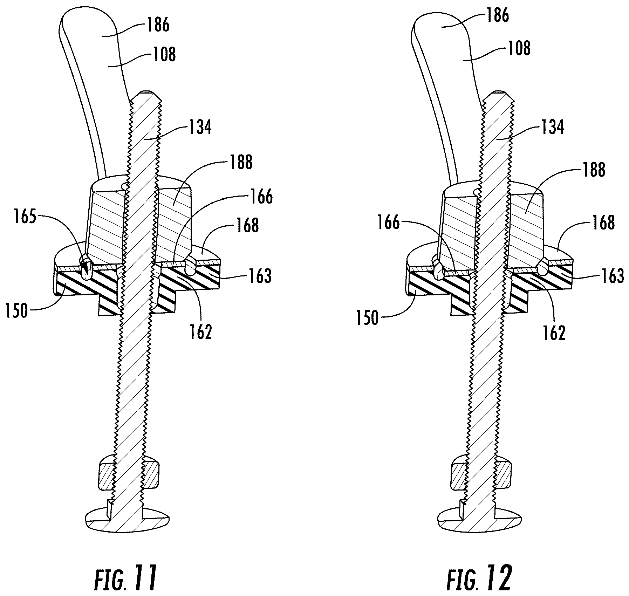

With reference to simplified FIGS. 11 and 12, the compression member 150 can have geometry changes, such as in the form of a groove 165, between the compression region 162 and region 163 (a radially outer region in this example) that supports second washer member 168 to help separate the compression of compression region 162 from acting on the second washer member 168.

The groove 165 isolates compression region 162 from region 163 to prevent or reduce shear forces between the compression region 162 and region 163, which could cause undesirable compression of region 163 and axial displacement of second washer member 168. Alternatively, this could cause the second outer washer member 168 to disconnect (e.g. peal) from the compression member 150. FIG. 11, shows compression region 162 in an uncompressed state and FIG. 12 shows the compression region 162 in a compressed state.

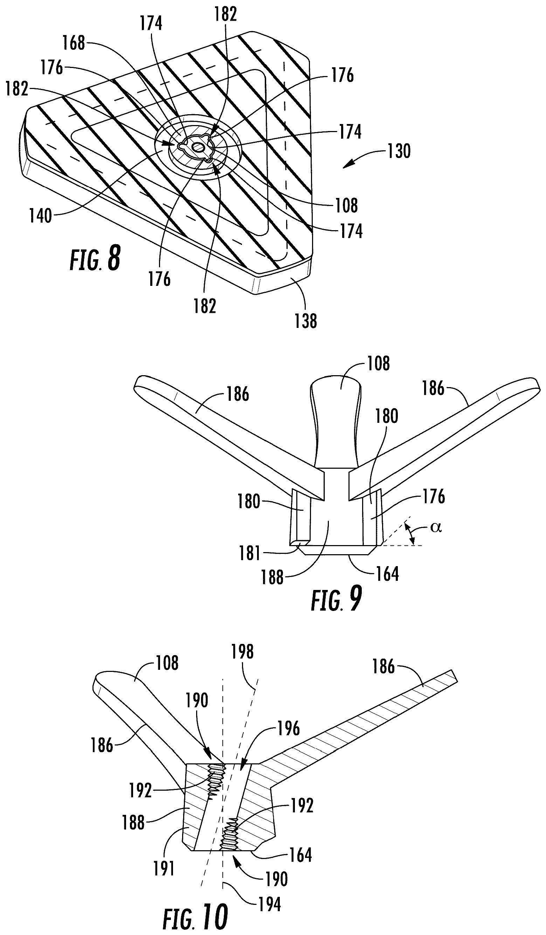

Notably, the desired amount of load may occur when the second angular catches 176 are angularly offset from the first angular catches, such as located angularly between adjacent first angular catches 174. In this situation, the user will rotate the handle 108 while the bottom of the angular catches 174 slides on the top surface 178 of the second washer member 168 until the first and second angular catches 174, 176 abut. In this instance, when properly aligned, the projections 180 that define the second angular catches 174, 176 will drop into the lobes 182 or recesses formed in the second washer member 168 that form the first angular catches 174. This action allows the opposed catches 174, 176 to abut and inhibit further rotation allowing for continued tightening of handle 108. FIG. 8 is a cross-sectional illustration through the second washer member 168 and the handle 108 when sufficient loading has occurred to allow the first and second angular catches 174, 176 to abut and to allow projections 180 to drop into lobes 182.

During this process as the bottom of the catches 174 slide on the top surface 178 of the second washer member 168, there will be increasing torque feedback to the installer. During the remaining rotation of handle 108 relative to compression member 150, the compression region will continue to compress. Once the angular catches 174 drop into lobes 180, some of the compression will release and result in both pronounced feedback to the installer and increased axial engagement between the catches 174, 176.

When the handle 108 drops into the lobes 182, this may also provide tactile feedback to the operator that the proper loading of the handle 108 against the filter element has been reached.

It is noted that in this embodiment, the compression member 150 and particularly portion 160 has a triangular cross-section that corresponds to a triangular cross-section of the end plate 130 so that the compression member 150 and attached second washer member 168 are angularly clocked to the end plate 130.

With reference to FIG. 9, the faces of projections 180 opposite the second angular catches 176 may provide a tapered surface 181 to assist in axially lifting the projections 180 out of lobes 182 when loosening handle 108. The angle α of the tapered 181 shall be such that premature loosening of the handle 108 is prevented, such as by way of vibrations, but sufficient enough to allow for a user to avoid needing a tool to loosen handle 108.

Here, the load applied by handle 108 will be slightly greater than the minimum desired load. In this example, by using three first angular catches 174 and three second angular catches 176, each of which are evenly angularly spaced apart (e.g. spaced apart 120 degrees), the amount of over-tightening after the desired load is reached will be held at an acceptable minimum.

The action of the projections 180 dropping into the lobes 182 of the second washer provides a further cue that the handle 108 has applied an appropriate level of loading.

Notably, FIG. 13 illustrates a handle 308 with only two levers 386.

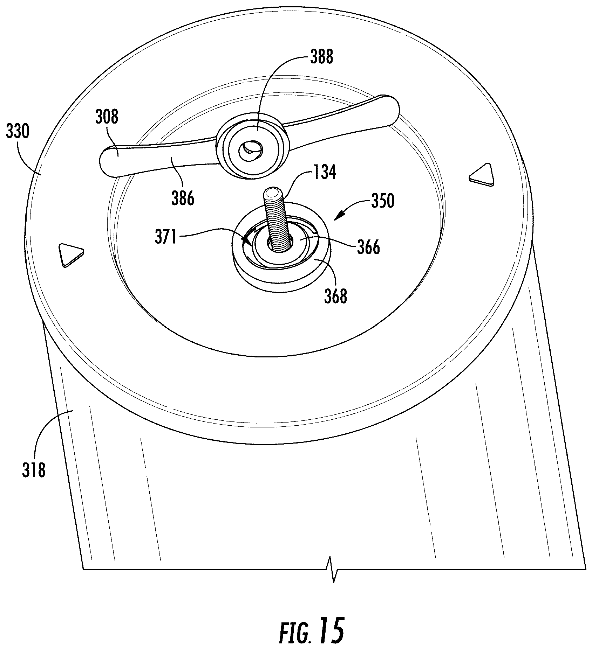

With additional reference to FIGS. 14 and 15, the coupler 388 of this design has an oval cross-sectional shape. The compression member 350 and particularly the second washer member 368 has an opening 371 that has a corresponding oval shape. When the desired load is applied to sufficiently compress the compression region 362 and the corresponding oval shapes are aligned, the coupler 388 is permitted to drop into the oval opening defined by the second washer member 368 and provide the visual and tactile cue that the handle 308 is properly tightened.

In other examples, the filter element 102 may include one or more identifiers thereon that determines when the desired load is applied. For example, as illustrated in FIG. 1, the end plate 130 and particularly the outer shell thereof 138 includes identifiers in the form of triangles provided on an outer surface of outer shell 138. As illustrated in FIG. 1, the levers of the handle 108 are aligned with the triangles that provide a quick and easy visual cue that the handle 108 has been properly tightened.

Further yet, the non-circular shape of the filter element or components thereof, e.g. the end plate 130, can provide the visual cue. It is clear in FIG. 2, for the mounted filter element 102, that each lever of the handle extends towards a corner of the triangular shape of the filter element 102. This again, provides a visual cue for quick and easy inspection to determine if the desired load has been reached.

In addition to and/or in opposite to determining when a desired load has been reached, these visual cues may at a minimum may illustrate if the handle 108 has been moved from its desired orientation. For example, if it is known that the handle 108 was originally tightened to the desired load, if the handle 108 is not in the proper orientation relative to the visual identifier/cue, an operator would quickly know to check the securement of the particular filter element 102/handle 108.

In this example, the rotation limiting feature provided by the second washer member 168 could be provided by the first end plate 130 or other components of the filter element 102.

In this example, the second washer member 168 is angularly fixed to the compression member 150, the compression member 150 is angularly fixed to the first end plate 130, the first end plate 130 is angularly fixed to the filter element sections 118, 120 which are angularly fixed to the mounting yoke 106. Thus, over rotation of the handle 108 cannot occur by rotation of the filter element 102 allowing for over loading of the sealing elements in the system.

As noted above, the compression member 150 and the first angular catches 174, in this example, are removable and reusable. In other embodiments, the compression member 150 and/or the first angular catches 174 are permanently attached to the end plate 130 and/or the rest of the filter element 102. The end plate 130 may be a permanent component of the filter element 102 or a reusable component.

Further, the angular catches could be provided by other shaped structures and could be reversed such that the projections could be provided by the filter element and the lobes or recesses could be provided by the handle. Other shapes such as apertures and pins could be used.

In addition to the features above, the handle 108 is configured for quick attachment and release from the threaded shank 134 of the mounting yoke 106. The handle 108 includes a plurality of levers 186 attached to a coupler 188. In this example, the handle 108 is a single unitary body with the levers 186 and coupler 188 formed from a continuous piece of material.

In some arrangements the lever(s) 186 and coupler 188 are separate components that rotationally engage one another. In such an arrangement, once the levers 186 has been used to tighten the coupler 188 to secure the filter element sections to the yoke 106, the levers 186 can be used to secure additional couplers 188 to other yokes 106 for securing other filter element sections. Thus, a single lever component is required for use with multiple couplers 188 of the overall system.

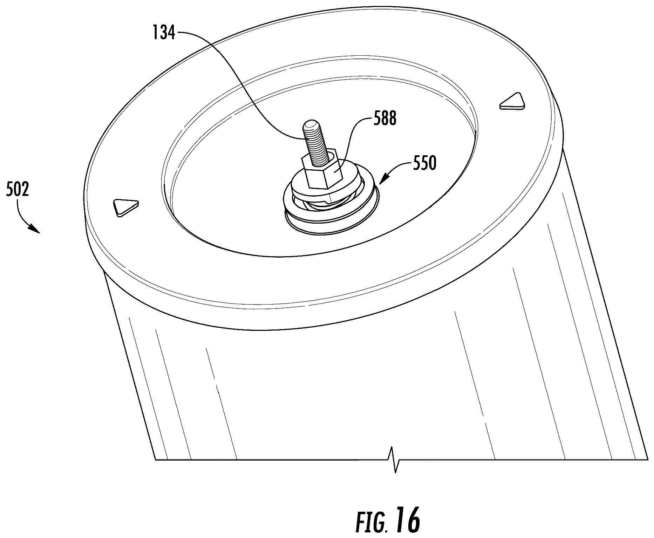

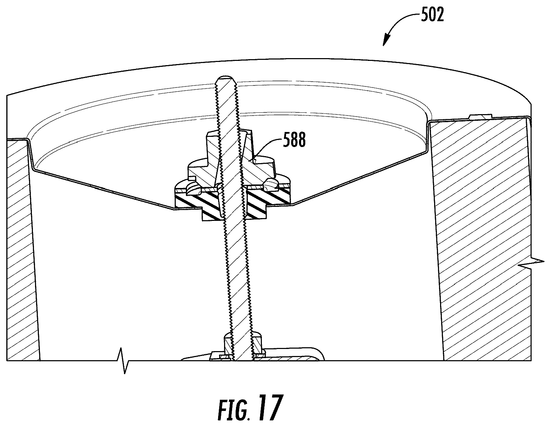

FIGS. 16 and 17 illustrates a coupler 588 that does not include the lever for securing the filter element 502. In other words, the coupler and levers are not a single continuous component). In this example, coupler 588 has an outer periphery configured to be engaged by a tool for imparting torque to the coupler 588. In this example, the outer periphery of coupler 588 is similar to a hexagonal nut. As such, the lever has not been illustrated but a lever configured to rotationally engage the coupler 588 would be provided.

In this example, the coupler 588 has the oval outer periphery and the compression member 550 has the oval cavity that cooperates with the oval periphery of the coupler as discussed above with the example of FIGS. 13-15.

Returning to the prior examples, the coupler 188 defines an internally threaded bore 190 that extends axially through the body 191 of the coupler 188. The threads 192 of the threaded bore define a threaded bore axis 194. This axis is generally orthogonal to axial pressure region 164 that applies pressure to the compression member 150 when securing the filter element 102 to the tube sheet 104. When the handle 108 is being tightened on the threaded shank 134, the threaded bore axis 194 is coincident with the axis 172. This is illustrated in FIGS. 4 and 5.

In this example, a clearance bore 196 intersects the internally threaded bore 190. The clearance bore 196 defines a clearance bore axis 198 that extends at a non-parallel angle to the threaded bore axis 194. The clearance bore 196 is sized and configured that when the clearance bore axis 198 is aligned with axis 172, the threads 192 of the threaded bore 190 do not engage threads 156 of shank 134. This is illustrated in FIG. 3. In this orientation, the handle can be slid axially along the threaded shank 134 with limited to no resistance and without requiring the user to rotate handle 108 about axis 172, as represented by arrow 200. This prevents the user from having to perform the conventional run-down of the nut on the threaded shank 134, which can be time consuming.

In some examples, the angle between axis 198 and axis 194 is between 10 and 20 degrees and preferably between 11 and 17.5 degrees.

Thus, prior to tightening or after sufficient loosening of handle 108, the user can quickly mount or remove handle 108.

When mounting the handle 108, the user would align the clearance bore 196 with the threaded shank 134 and slide handle 108 along shank 134 until it abuts first washer member 166 as illustrated in FIG. 3. Once in this position, the user would manipulate the handle 108 to pivot the handle 108 such that the threaded shank 134 is aligned with the threaded bore 190 and the threads 192 engage threads 156 as illustrated in FIG. 4. Thereafter, the user can rotate the handle 108 about axis 172 to tighten the handle 108 against the filter element 102. Notably, when the handle 108 is tight against the filter element, the axial pressure region 164 engages the top surface 170 of the first washer member 166 and prevents pivoting back to the orientation where the clearance bore 196 aligns with the threaded shank 134 (e.g. axis 198 aligns with axis 172). Only after the user has rotated the handle 108 to loosen the handle 108 can the handle be pivoted to the orientation of FIG. 3 and the handle quickly slid off of shank 134.

In a preferred arrangement, the lead angle of threads 156 and 192 cause the handle 108 to move axially along the threaded shank 134 quickly such that limited angular rotation of handle 108 is required to tighten handle 108 against the filter element 102. This reduces the likelihood of the handle 108 pivoting back to the orientation of FIG. 3 prior to sufficient force acting between axial pressure region 164 and the compression member 150 to maintain the handle 108 in the orientation of FIG. 4. In an example, only 2.5 turns of the handle 108 are required to reach the desired axial load on the filter element 102.

However, in some embodiments, knurling or texturing can be provided to surface 170 to further prevent back driving handle 108 or prevent pivoting to the orientation in FIG. 3.

In one example, this results in approximately 13 mm of travel of the handle 108 along shank 134.

This same thread pattern would be used with the helical wiper seal discussed above.

Further, a proprietary thread pitch could be provided.

In one example, the thread of the threaded shank 134 is m12 x 2.5 mm, 5 mm lead with 7.55 degree lead angle. The thread is based on an ISO 529 vee thread profile. The external thread minor diameter is 9.853 mm. The external thread major diameter is 12.49 mm. The internal thread minor diameter is 10.106 and the internal thread major diameter is 12.812 of the handle 108, nut 202 discussed below, and the helical wiper seal discussed above. The thread of the thread shank 134 can be a bespoke thread to assist with fast compression of the filter gaskets. A proprietary thread can further promote mounting of a correct filter element to the system. However, the use of standard thread configurations is also contemplated.

The over tighten features and the quick mount/release features of the arrangement discussed above may be used together or independent from one another.

With reference to FIGS. 1 and 2, in the illustrated example, the threaded shank 134 is provided by a carriage bolt 201 mounted to a yoke in the form of tripod 204. The tripod 204 is attached to the tube sheet 104 and the carriage bolt 201 is mounted to a free end of the tripod 204. In other embodiments, the threaded shank could be a rod directly attached to the tube sheet. By using a carriage bolt 201, the carriage bolt 201 can be clocked relative to the tripod 204 such that the carriage bolt 201 will not rotate when the user attempts to tighten the handle 108.

In some examples, a proprietary nut 202 can be used to secure carriage bolt 201 to tripod 204. The proprietary nut 202 will have an outer peripheral surface that requires a keyed tool to fasten the nut 202 to carriage bolt 201. Once the nut is torqued to 50 Nm, the only way it can be removed is destructively. This prevents a third party from using a different handle having a different thread pitch as compared to the proprietary thread pitch used with shank 134 discussed above.

While the system above is described with the quick mount coupler 188, other systems could incorporate other benefits of the examples while simply using a special nut that does not incorporate the clearance bore of the coupler discussed above.

It is contemplated that in some examples, the coupler, lever or the entire handle could be permanently attached to the filter. For instance, the coupler could be captured by the end plate 130 such that it could rotate relative to the end plate, but it could not be removed from the end plate 130.

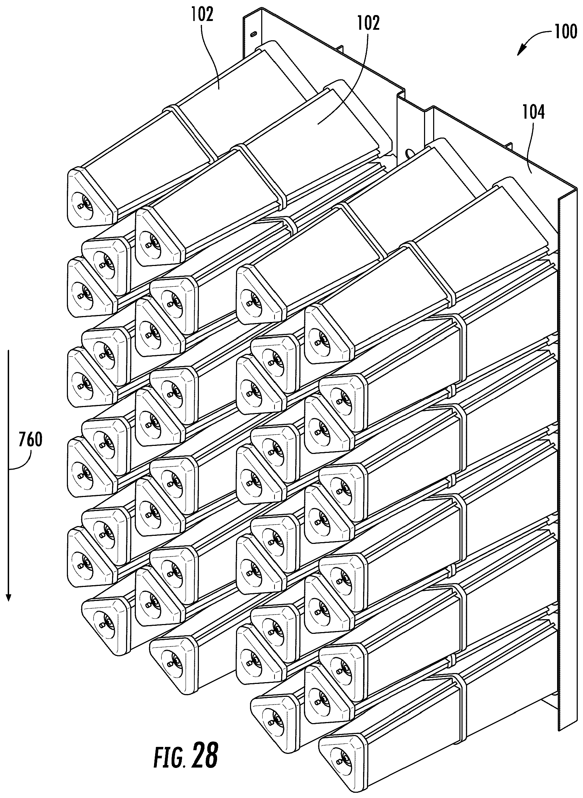

FIG. 28 is an alternative illustration of system 100 and illustrates more filter elements 102. In FIG. 28, the system 100 has the filter elements 102 in a cantilevered orientation with respect to tube sheet 104. Tube sheet 104 is oriented substantially vertical and parallel to gravity, which is illustrated as arrow 760. When the yoke of the system 100 is centered through an end plate 130 associated with a corresponding filter element 102, the force profile on the filter element 102 due to the cantilevered orientation can present sealing issues for the filter element 102 against the outer face of the tube sheet 104. The triangular cross-sectional shape of the filter elements 102 and orientation as illustrate could further exacerbate the sealing issues as sealing pressure at the vertically lower portion of the triangular seal could be different than the sealing pressure at the vertically upper portion of the triangular seal. This is due to gravitational forces that are not parallel to the clamping forces for securing the filter elements 102 against the tube sheet 104.

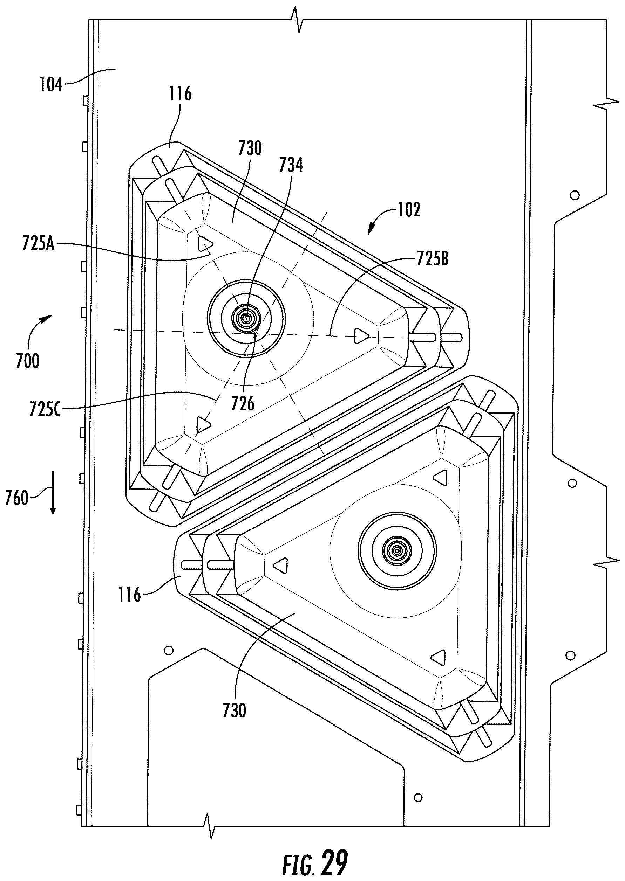

FIG. 29 illustrates an end view of a portion of a further system 700 that attempts to compensate for the sealing pressure imbalance and provide more uniform sealing pressure to the various seals within the system and particularly to tube sheet seal 116 of the filter elements 102. While only two filter elements are provided, this system 700 can incorporate any number of elements and as many, fewer than or more than system 100. To compensate for the forces provided by gravity, the mounting yoke 706 is configured such that the shank 734 of the mounting yoke 706 is off-center from center of the end plate 730 securing the filter element 102 to the tube sheet 104.

In addition, the shank 734 is off-center from the central axis of the filter element 102.

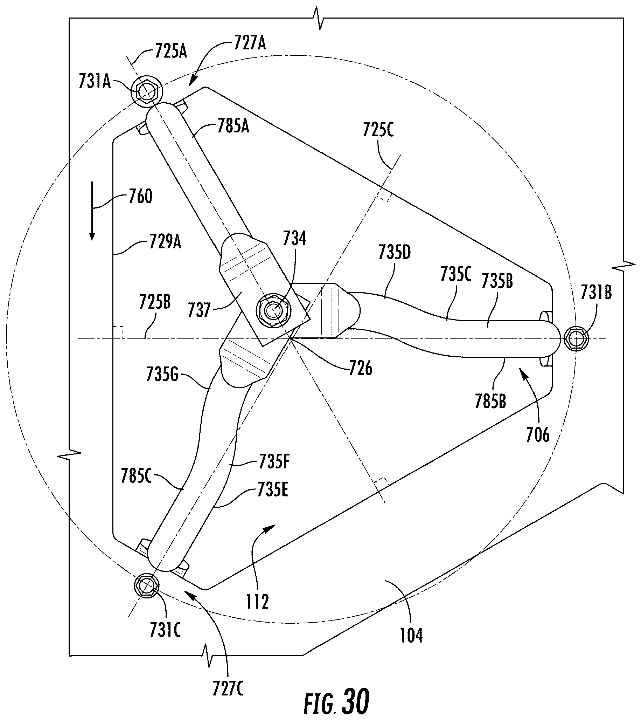

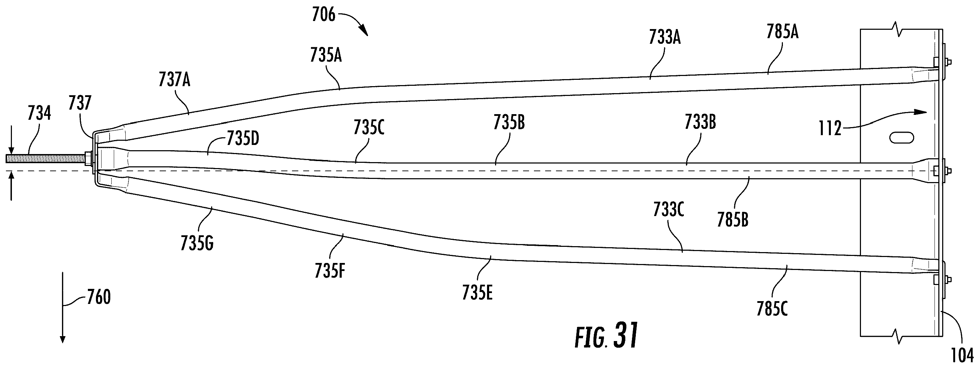

With additional reference to FIGS. 30 and 31, an alternative mounting yoke 706 is illustrated with the filter element 102 and end plate 730 removed. The shank 734 is moved toward the upper most corner 727A of the tube sheet aperture 112 along an axis 725A that generally extends through the center 726 of tube sheet aperture 112 and the upper most corner 727A of tube sheet aperture 112. In some examples, the axis 725A bisects corner 727A and passes through center 726. In doing so, the shank 734 is moved both vertically upward and horizontally relative to center 726. In this example, the shank 734 is moved towards the vertically oriented side 729A of tube sheet aperture 112.

In this example, the mounting yoke 706 includes three legs 785A, 785B, 785C. The shank 734 is moved horizontally away from the mounting location 731B of leg 785B and horizontally towards the mounting locations 731A, 731C of legs 785A and 785C. Further, the shank 734 is moved vertically upward toward the mounting location 731A of leg 785A and vertically away from the mounting locations 731B and 731C of legs 785B and 785C.

Notably, center 726 is typically co-axial about an axis perpendicular to the tube sheet 104 with a center of a circle defined by the mounting locations 731A, 731B, 731C of the legs 785A, 785B, 785C. As such, center 726 may be used to the center of either arrangement.

When the user mounts the filter element 102 to the mounting yoke 706, the upper most leg 785A becomes a tension leg, the bottom most leg 785C is a compression leg and the vertically intermediate leg 785B is a neutral leg. Leg 785A is considered a tension leg because it acts in tension during service prior to the filter element 102 being tightened against the tube sheet 104 while the filter element rests vertically on the mounting yoke 706 due to gravity. The lower most leg 785C is considered the compression leg because during service, prior to tightening the filter element 102 against the tube sheet, this leg is loaded in compression due to gravity. The intermediate leg 785B is referred to as a neutral leg because it generally provides lateral stability to the tension leg 785A and the compression leg 785C.

This off-center arrangement of the mounting shank 734 and associated configuration of the legs 785A, 785B, 785C redistributes the non-uniform gasket compression forces applied to tube sheet seal 116 and moves some of the loading that would otherwise be applied proximate the bottom most corner 727C (e.g. proximate mounting location 731C) due to the cantilevered configuration (e.g. associated with gravitational forces) upwards towards the upper most corner 727A (e.g. proximate mounting location 731A).

In this example, each leg 785A, 785B, 785C has its own profile to effectuate the load redistribution and off-center location of the mounting shank 734. However, the legs are generally designed so that they mate with the inner corners of the tube sheet seal 116 to provide clocking and proper seating of the filter element 102 as described previously with relation to mounting yoke 106. Thus, each leg 785A, 785B, 785C, when begining at the end opposite the mounting shank 734 begins with a generally straight section 733A, 733B, 733C.

Leg 785A has bend 735A that is planar with a plan orthogonal to the tube sheet 104 and that includes axis 725A. This bend 735A allows the straight section 733A of leg 785A to extend outward from the tube sheet 104 at a more horizontal orientation (i.e. more perpendicular to tube sheet 104) than if leg 785A is straight between flattened tip 737 and the tube sheet 104. The horizontal orientation of leg 785A improves stability and also, when using multiple filter element sections, assists in guiding and positioning subsequently mounted filter element sections when assembling the full filter element.

Leg 785B is a more complex shape and has a first bend 735B, a second bend 735C and a third bend 735D. First bend 735B has a smaller radius that second and third bends 735C, 735D. First bend 735B is planar in that it is within a plane defined by axis 725B that is orthogonal to tube sheet 104. The second and third bends 735C, 735D are non-planar and bend out of the plane defined by axis 725B that is orthogonal to tube sheet 104. These non-planar bends 735C, 735D can be best viewed in FIG. 30. In general, the non-planar bends 735C, 735D in leg 785B compensate for the vertical shift of the mounting shank 734.

Leg 785C is generally a mirror of leg 785B and has first bend 735E, second bend 735F and third bend 735G. First bend 735E is planar in that it is within a plane defined by axis 725C that is orthogonal to tube sheet 104. The second and third bends 735F, 735G are non-planar and bend out of the plane defined by axis 725C that is orthogonal to tube sheet 104. These non-planar bends 735F, 735G can be best viewed in FIGS. 30.

Preferably, the flattened tip 737 of leg 785A is the outermost tip and terminates over the other leg tips to maximize rigidity of the mounting yoke 706 and to better accommodate gravitational loads. Preferably, all flattened tips are generally parallel to one another as well as parallel to tube sheet 104 and the mounting shank 734 extends perpendicularly relative to the flattened tips as well as to the tube sheet 104.

Further, with reference to FIG. 31, the lengths of straight section 733A of leg 785A is longer than the straight sections 733B, 733C. In preferred embodiments, the lengths of all of the straight sections 733A, 733B, 733C are such that they extend into the outer most filter element section, e.g. filter element section 118, so that they can mate with the inner most end of the section and provide proper clocking and location of the filter element section by engaging the corners of any seal components thereof. However, this is not required in all examples.

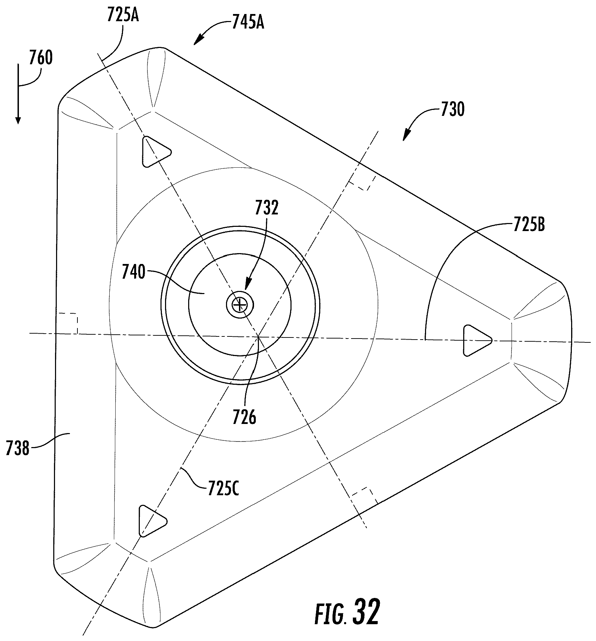

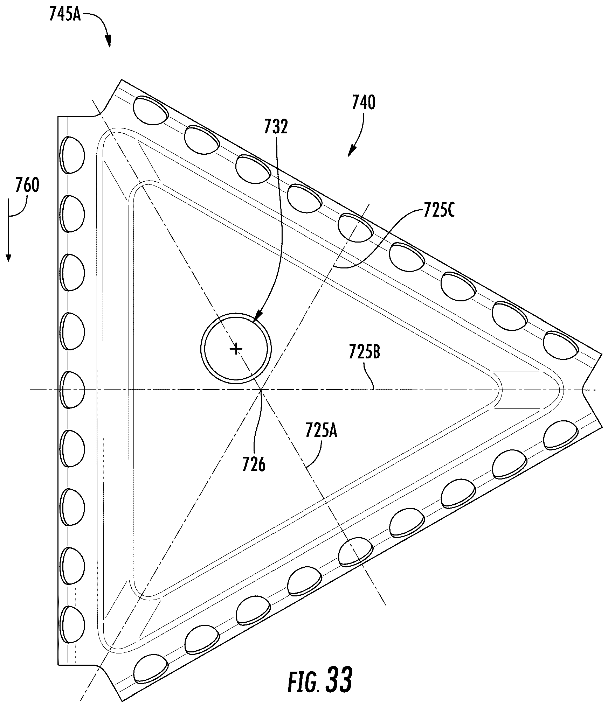

FIG. 32 illustrates a corresponding end plate 730 and FIG. 33 illustrates an inner plate 732 of the end plate 730. These FIGS. 32 and 33 illustrate that in addition to the mounting shank 734 of the mounting yoke 706 being offset towards the mounting location 733A of leg 785A, endplate aperture 732 is similarly offset towards the corresponding corner 745A of the end plate 730 and the inner plate 740 of end plate 730 along axis 725A. Axis 725A is generally perpendicular to the side opposite corner 745A and generally bisects corner 745A.

In one example, the end plate 730 is reusable and the filter element 102 is the same as used in system 100. Here, the end plate 730 allows for the use of the same filter element 102 with either arrangement. In other embodiments, the end plate 730 may be formed as an integral component with the rest of the filter element or with one filter element section if the filter element is formed from a plurality of sections.

In a preferred example, the straight sections 733A, 733B, 733C and the tubesheet seal 116 are configured such that the inner periphery of the tube sheet seal 116 and particularly the corners of the tube sheet seal 116 are formed to mate with the straight sections 733A, 733B, 733C of legs 785A, 785B, 785C. Again, this is done to improve stability of the fit and helps enter the fitler about the tube sheet aperture 112.

By redistributing the loading to provide more uniform sealing pressure all portions of the tube sheet seal 116 that the legs 785A, 785B, 785C compress simultaneously and more uniform and similarly all portions of the tube sheet seal 116 that engage tube sheet 104 compress simultaneously and more uniformly. This uniform compression of the tube sheet seal 116 reduces the torque required to achieve full tube sheet seal 116 compression. This also reduces or otherwise prevents over compression of some portions of the tube sheet seal 116, under compression of portions of the tube sheet seal 116, or a combination of both over and under compression of portions of the tube sheet seal 116.

The offset location of the mounting shank 734 causes the tension within the legs 785A, 785B, 785C generated when tightening a filter element 102 against the tube sheet 104 to be non-uniform. Instead, a larger portion of the tension acts through the uppermost leg 785A. This is due, in part, to the straighter profile of leg 785A. Combined with this arrangement, the reacting forces through the end plate 730 are transmitted along the axis of the filter element 102 but are shifted upward toward upper portions of the tube sheet seal 116 (and other seals). This redistribution of loads through the filter element 102 results in more uniform compression of all seals.

The use of the terms "a" and "an" and "the" and similar referents in the context of describing the invention (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. The term "at least one of A and B" shall be understood to mean "only A, only B or both A and B."

## Claims

1. A filter element (102) comprising:
a plurality of interconnected panel sections (228) forming a tubular arrangement surrounding a central cavity (110), the plurality of interconnected panel sections (228) including at least a first, a second, and a third panel section, each panel section (228) includes:
a filter media panel (230) having an inner surface (252) and an outer surface (253), the filter media panel (230) extending laterally between first and second sides;
a filter media panel support member (232, 234) defining a cavity receiving the filter media panel (230), said filter element being **characterized in that** the filter media panel support member (232, 234) defines a first wing portion (250, 246, 245, 247) adjacent the first side of the filter media panel (230) and a second wing portion (250, 246, 245, 247) adjacent the second side of the filter media panel (230);
wherein the first wing portion (250, 246, 245, 247) of the first panel section (228) is attached to the second wing portion (250, 246, 245, 247) of the second panel section (228) to interconnect the first panel section (228) to the second panel section (228).

2. The filter element of claim 1, wherein:
for each panel section (228):
the filter media panel support member (232, 234) includes:
an inner support (232) adjacent the inner surface (252), the inner support (232) includes a first connection region (244) proximate the first side and a second connection region (244) proximate the second side;
an outer support (234) adjacent the outer surface (253) the outer support (234) includes a third connection region (250) proximate the first side and a fourth connection region (250) proximate the second side;
the first (244) and third connection regions (250) are secured to one another forming the first wing portion (250, 246, 245, 247) and securing the inner and outer supports (232, 234) to one another;
the second (244) and fourth (250) connection regions are secured to one another forming the second wing portion (250, 246, 245, 247) and securing the inner and outer supports (232, 234) to one another; and
the cavity of the panel section (228) is formed between the inner and outer supports (232, 234).

3. The filter element of claim 2, wherein for each panel section (228), a first portion (240) of the filter media panel (230) extends into the first wing portion (250, 246, 245, 247) and is sandwiched between the first (2440 and third (250) connection regions and a second portion (240) of the filter media panel (230) extends into the second wing portion (250, 246, 245, 247) and is sandwiched between the second (244) and fourth (250) connection regions.

4. The filter element of claim 1, further comprising a clip (236) that secures the first wing portion (250, 246, 245, 247) of the first panel section (228) to the second wing portion (250, 246, 245, 247) of the second panel section (228).

5. The filter element of claim 4, wherein the clip (236) is U-shaped.

6. The filter element of claim 3, wherein for each panel section (228) one of the third (250) or fourth (250) connection regions includes an outward extending section (250) extending outward and away from the first side and one of the first (244) or second (244) connection regions includes an outward extending intermediate section (245) and an inward extending end section (247), the inward extending end section (247) being folded over the intermediate section (245) forming a receiving slot (251) therebetween, the outward extending section (250) being received in the receiving slot (251).

7. The filter element of claim 1, wherein for each panel section (228):
the filter media panel (230) has a flow face extending between the first and second sides;
the first and second wing portions (250, 246, 245, 247) extend outward away from the corresponding first and second sides at a non-parallel, non-perpendicular orientation relative to flow face.

8. The filter element of claim 2, wherein, for each panel section (228):
the inner support (232) includes a main panel (242) that is adjacent the inner surface (252), the first connection region (244) is connected to and extends at an angle relative to the main panel (242) proximate the first side and the second connection region (244) is connected to and extends at an angle relative to the main panel (242) proximate the second side; and
the outer support (234) includes a main panel (248) that is adjacent the outer surface (253), a first intermediate side section (249) adjacent the first side that extends inward from the main panel (248) towards the inner support (232), the third connection region (250) is provided by an end section (250) that extends outward from the first side at an angle relative to the inner surface (252), a second intermediate side section (249) adjacent the second side (254) that extends inward from the main panel (248) towards the inner support (232), the fourth connection region (250) is provided by an end section (250) that extends outward from the second side at an angle relative to the inner surface (252).

9. The filter element of claim 1, wherein:
each panel section (228) is generally planar;
the plurality of panel sections (228) is greater than two and the interconnection of the panel sections (228) forms a generally polygonal cross-sectional shape.

10. The filter element of claim 2, wherein the inner support (232 is a unitary one-piece construction formed from a mesh material permitting air flow therethrough, and the outer support (234) is a unitary one-piece construction formed from a mesh material permitting air flow therethrough.

11. The filter element of claim 1, further including a first seal member (262) attached to a first end of the plurality of panel sections (228) and a second seal member (263) attached to a second end of the plurality of panel sections (228), the first seal member sealing a first end of each filter media panel (230) of the plurality of panel sections and the second seal member sealing a second end of each filter media panel (230) of the plurality of panel sections.

12. The filter element of claim 11, wherein the first and second seal members (262, 263) are molded to the plurality of panel sections (228) with the filter media panels (230) and filter media panel support members (232, 234) being received in the first and second seal members (262, 263).

## Patentansprüche

1. Ein Filterelement (102), das Folgendes beinhaltet:
eine Vielzahl von miteinander verbundenen Plattenabschnitten (228), die eine röhrenförmige Anordnung bilden, die einen zentralen Hohlraum (110) umgibt, wobei die Vielzahl von miteinander verbundenen Plattenabschnitten (228) mindestens einen ersten, einen zweiten und einen dritten Plattenabschnitt umfasst, wobei jeder Plattenabschnitt (228) Folgendes umfasst:
eine Filtermedienplatte (230) mit einer Innenfläche (252) und einer Außenfläche (253), wobei sich die Filtermedienplatte (230) seitlich zwischen einer ersten und einer zweiten Seite erstreckt;
ein Filtermedienplattenstützelement (232, 234), das einen Hohlraum definiert, der die Filtermedienplatte (230) aufnimmt, wobei das Filterelement **dadurch gekennzeichnet ist, dass**
das Filtermedienplattenstützelement (232, 234) einen ersten Flügelabschnitt (250, 246, 245, 247) angrenzend an die erste Seite der Filtermedienplatte (230) und einen zweiten Flügelabschnitt (250, 246, 245, 247) angrenzend an die zweite Seite der Filtermedienplatte (230) definiert;
wobei der erste Flügelabschnitt (250, 246, 245, 247) des ersten Plattenabschnitts (228) an dem zweiten Flügelabschnitt (250, 246, 245, 247) des zweiten Plattenabschnitts (228) befestigt ist, um den ersten Plattenabschnitt (228) mit dem zweiten Plattenabschnitt (228) zu verbinden.

2. Filterelement gemäß Anspruch 1, wobei:
für jeden Plattenabschnitt (228):
das Filtermedienplattenstützelement (232, 234) Folgendes umfasst:
eine innere Stütze (232) angrenzend an die Innenfläche (252), wobei die innere Stütze (232) einen ersten Verbindungsbereich (244) nahe der ersten Seite und einen zweiten Verbindungsbereich (244) nahe der zweiten Seite umfasst;
eine äußere Stütze (234) angrenzend an die Außenfläche (253), wobei die äußere Stütze (234) einen dritten Verbindungsbereich (250) nahe der ersten Seite und einen vierten Verbindungsbereich (250) nahe der zweiten Seite umfasst;
der erste (244) und der dritte Verbindungsbereich (250) aneinander gesichert sind, wobei sie den ersten Flügelabschnitt (250, 246, 245, 247) bilden und die innere und die äußere Stütze (232, 234) aneinander sichern;
der zweite (244) und der vierte (250) Verbindungsbereich aneinander gesichert sind, wobei sie den zweiten Flügelabschnitt (250, 246, 245, 247) bilden und die innere und die äußere Stütze (232, 234) aneinander sichern; und
der Hohlraum des Plattenabschnitts (228) zwischen der inneren und der äußeren Stütze (232, 234) gebildet ist.

3. Filterelement gemäß Anspruch 2, wobei sich für jeden Plattenabschnitt (228) ein erster Abschnitt (240) der Filtermedienplatte (230) in den ersten Flügelabschnitt (250, 246, 245, 247) erstreckt und zwischen dem ersten (244) und dem dritten (250) Verbindungsbereich eingeschlossen ist und sich ein zweiter Abschnitt (240) der Filtermedienplatte (230) in den zweiten Flügelabschnitt (250, 246, 245, 247) erstreckt und zwischen dem zweiten (244) und dem vierten (250) Verbindungsbereich eingeschlossen ist.

4. Filterelement gemäß Anspruch 1, das ferner eine Klammer (236) beinhaltet, die den ersten Flügelabschnitt (250, 246, 245, 247) des ersten Plattenabschnitts (228) an dem zweiten Flügelabschnitt (250, 246, 245, 247) des zweiten Plattenabschnitts (228) sichert.

5. Filterelement gemäß Anspruch 4, wobei die Klammer (236) U-förmig ist.

6. Filterelement gemäß Anspruch 3, wobei für jeden Plattenabschnitt (228) einer von dem dritten (250) oder dem vierten (250) Verbindungsbereich einen sich nach außen erstreckenden Abschnitt (250) umfasst, der sich nach außen und von der ersten Seite weg erstreckt, und einer von dem ersten (244) oder dem zweiten (244) Verbindungsbereich einen sich nach außen erstreckenden Zwischenabschnitt (245) und einen sich nach innen erstreckenden Endabschnitt (247) umfasst, wobei der sich nach innen erstreckende Endabschnitt (247) über den Zwischenabschnitt (245) gefaltet ist, wobei er einen Aufnahmeschlitz (251) dazwischen bildet, wobei der sich nach außen erstreckende Abschnitt (250) in dem Aufnahmeschlitz (251) aufgenommen ist.

7. Filterelement gemäß Anspruch 1, wobei für jeden Plattenabschnitt (228):
die Filtermedienplatte (230) eine Strömungsfläche aufweist, die sich zwischen der ersten und der zweiten Seite erstreckt;
der erste und der zweite Flügelabschnitt (250, 246, 245, 247) sich nach außen weg von der entsprechenden ersten und zweiten Seite in einer nicht parallelen, nicht senkrechten Orientierung relativ zu der Strömungsfläche erstrecken.

8. Filterelement gemäß Anspruch 2, wobei für jeden Plattenabschnitt (228):
die innere Stütze (232) eine Hauptplatte (242) umfasst, die angrenzend an die Innenfläche (252) ist, wobei der erste Verbindungsbereich (244) mit der Hauptplatte (242) nahe der ersten Seite verbunden ist und sich in einem Winkel relativ zu dieser erstreckt und der zweite Verbindungsbereich (244) mit der Hauptplatte (242) nahe der zweiten Seite verbunden ist und sich in einem Winkel relativ zu dieser erstreckt; und
die äußere Stütze (234) Folgendes umfasst: eine Hauptplatte (248), die angrenzend an die Außenfläche (253) ist, einen ersten Zwischenseitenabschnitt (249) angrenzend an die erste Seite, der sich von der Hauptplatte (248) nach innen zu der inneren Stütze (232) erstreckt, wobei der dritte Verbindungsbereich (250) durch einen Endabschnitt (250) bereitgestellt ist, der sich von der ersten Seite in einem Winkel relativ zu der Innenfläche (252) nach außen erstreckt, einen zweiten Zwischenseitenabschnitt (249) angrenzend an die zweite Seite (254), der sich von der Hauptplatte (248) nach innen zu der inneren Stütze (232) erstreckt, wobei der vierte Verbindungsbereich (250) durch einen Endabschnitt (250) bereitgestellt ist, der sich von der zweiten Seite in einem Winkel relativ zu der Innenfläche (252) nach außen erstreckt.

9. Filterelement gemäß Anspruch 1, wobei:
jeder Plattenabschnitt (228) im Allgemeinen planar ist;
die Vielzahl von Plattenabschnitten (228) größer als zwei ist und die Verbindung der Plattenabschnitte (228) eine im Allgemeinen polygonale Querschnittsform bildet.

10. Filterelement gemäß Anspruch 2, wobei die innere Stütze (232) eine einheitliche einteilige Konstruktion ist, die aus einem Netzmaterial gebildet ist, das einen Luftstrom dadurch ermöglicht, und die äußere Stütze (234) eine einheitliche einteilige Konstruktion ist, die aus einem Netzmaterial gebildet ist, das einen Luftstrom dadurch ermöglicht.

11. Filterelement gemäß Anspruch 1, ferner umfassend ein erstes Dichtungselement (262), das an einem ersten Ende der Vielzahl von Plattenabschnitten (228) befestigt ist, und ein zweites Dichtungselement (263), das an einem zweiten Ende der Vielzahl von Plattenabschnitten (228) befestigt ist, wobei das erste Dichtungselement ein erstes Ende jeder Filtermedienplatte (230) der Vielzahl von Plattenabschnitten abdichtet und das zweite Dichtungselement ein zweites Ende jeder Filtermedienplatte (230) der Vielzahl von Plattenabschnitten abdichtet.

12. Filterelement gemäß Anspruch 11, wobei das erste und das zweite Dichtungselement (262, 263) an die Vielzahl von Plattenabschnitten (228) angeformt sind, wobei die Filtermedienplatten (230) und die Filtermedienplattenstützelemente (232, 234) in dem ersten und dem zweiten Dichtungselement (262, 263) aufgenommen sind.

## Revendications

1. Un élément filtrant (102) comprenant :
une pluralité de sections de panneau interconnectées (228) formant un agencement tubulaire entourant une cavité centrale (110), la pluralité de sections de panneau interconnectées (228) incluant au moins une première, une deuxième et une troisième section de panneau, chaque section de panneau (228) inclut :
un panneau de milieu filtrant (230) ayant une surface interne (252) et une surface externe (253), le panneau de milieu filtrant (230) s'étendant latéralement entre des premier et deuxième côtés ;
un organe de support de panneau de milieu filtrant (232, 234) définissant une cavité recevant le panneau de milieu filtrant (230), ledit élément filtrant étant **caractérisé en ce que**
l'organe de support de panneau de milieu filtrant (232, 234) définit une première portion d'aile (250, 246, 245, 247) adjacente au premier côté du panneau de milieu filtrant (230) et une deuxième portion d'aile (250, 246, 245, 247) adjacente au deuxième côté du panneau de milieu filtrant (230) ;
dans lequel la première portion d'aile (250, 246, 245, 247) de la première section de panneau (228) est fixée à la deuxième portion d'aile (250, 246, 245, 247) de la deuxième section de panneau (228) pour interconnecter la première section de panneau (228) à la deuxième section de panneau (228).

2. L'élément filtrant de la revendication 1, dans lequel :
pour chaque section de panneau (228) :
l'organe de support de panneau de milieu filtrant (232, 234) inclut :
un support interne (232) adjacent à la surface interne (252), le support interne (232) inclut une première région de connexion (244) à proximité du premier côté et une deuxième région de connexion (244) à proximité du deuxième côté ;
un support externe (234) adjacent à la surface externe (253), le support externe (234) inclut une troisième région de connexion (250) à proximité du premier côté et une quatrième région de connexion (250) à proximité du deuxième côté ;
les première (244) et troisième (250) régions de connexion sont assujetties l'une à l'autre, formant la première portion d'aile (250, 246, 245, 247) et assujettissant les supports interne et externe (232, 234) l'un à l'autre ;
les deuxième (244) et quatrième (250) régions de connexion sont assujetties l'une à l'autre, formant la deuxième portion d'aile (250, 246, 245, 247) et assujettissant les supports interne et externe (232, 234) l'un à l'autre ; et
la cavité de la section de panneau (228) est formée entre les supports interne et externe (232, 234).

3. L'élément filtrant de la revendication 2, dans lequel pour chaque section de panneau (228), une première portion (240) du panneau de milieu filtrant (230) s'étend jusque dans la première portion d'aile (250, 246, 245, 247) et est prise en sandwich entre les première (244) et troisième (250) régions de connexion et une deuxième portion (240) du panneau de milieu filtrant (230) s'étend jusque dans la deuxième portion d'aile (250, 246, 245, 247) et est prise en sandwich entre les deuxième (244) et quatrième (250) régions de connexion.

4. L'élément filtrant de la revendication 1, comprenant en outre une attache (236) qui assujettit la première portion d'aile (250, 246, 245, 247) de la première section de panneau (228) à la deuxième portion d'aile (250, 246, 245, 247) de la deuxième section de panneau (228).

5. L'élément filtrant de la revendication 4, dans lequel l'attache (236) est en forme de U.

6. L'élément filtrant de la revendication 3, dans lequel pour chaque section de panneau (228), l'une des troisième (250) ou quatrième (250) régions de connexion inclut une section s'étendant vers l'extérieur (250) s'étendant vers l'extérieur et s'éloignant du premier côté et l'une des première (244) ou deuxième (244) régions de connexion inclut une section intermédiaire s'étendant vers l'extérieur (245) et une section d'extrémité s'étendant vers l'intérieur (247), la section d'extrémité s'étendant vers l'intérieur (247) étant pliée par-dessus la section intermédiaire (245), formant une fente de réception (251) entre elles, la section s'étendant vers l'extérieur (250) étant reçue dans la fente de réception (251).

7. L'élément filtrant de la revendication 1, dans lequel pour chaque section de panneau (228) :
le panneau de milieu filtrant (230) a une face d'écoulement s'étendant entre les premier et deuxième côtés ;
les première et deuxième portions d'aile (250, 246, 245, 247) s'étendent vers l'extérieur en s'éloignant des premier et deuxième côtés correspondants selon une orientation non parallèle, non perpendiculaire par rapport à la face d'écoulement.

8. L'élément filtrant de la revendication 2, dans lequel, pour chaque section de panneau (228) :
le support interne (232) inclut un panneau principal (242) qui est adjacent à la surface interne (252), la première région de connexion (244) est connectée à et s'étend selon un angle par rapport au panneau principal (242) à proximité du premier côté et la deuxième région de connexion (244) est connectée à et s'étend selon un angle par rapport au panneau principal (242) à proximité du deuxième côté ; et
le support externe (234) inclut un panneau principal (248) qui est adjacent à la surface externe (253), une première section de côté intermédiaire (249) adjacente au premier côté qui s'étend vers l'intérieur depuis le panneau principal (248) vers le support interne (232), la troisième région de connexion (250) est fournie par une section d'extrémité (250) qui s'étend vers l'extérieur depuis le premier côté selon un angle par rapport à la surface interne (252), une deuxième section de côté intermédiaire (249) adjacente au deuxième côté (254) qui s'étend vers l'intérieur depuis le panneau principal (248) vers le support interne (232), la quatrième région de connexion (250) est fournie par une section d'extrémité (250) qui s'étend vers l'extérieur depuis le deuxième côté selon un angle par rapport à la surface interne (252).

9. L'élément filtrant de la revendication 1, dans lequel :
chaque section de panneau (228) est généralement plane ;
la pluralité de sections de panneau (228) est supérieure à deux et l'interconnexion des sections de panneau (228) forme une section transversale de forme généralement polygonale.

10. L'élément filtrant de la revendication 2, dans lequel le support interne (232) est une construction unitaire monobloc formée à partir d'un matériau en treillis permettant un écoulement d'air à travers celui-ci, et le support externe (234) est une construction unitaire monobloc formée à partir d'un matériau en treillis permettant un écoulement d'air à travers celui-ci.

11. L'élément filtrant de la revendication 1, incluant en outre un premier organe d'étanchéité (262) fixé à une première extrémité de la pluralité de sections de panneau (228) et un deuxième organe d'étanchéité (263) fixé à une deuxième extrémité de la pluralité de sections de panneau (228), le premier organe d'étanchéité assurant l'étanchéité d'une première extrémité de chaque panneau de milieu filtrant (230) de la pluralité de sections de panneau et le deuxième organe d'étanchéité assurant l'étanchéité d'une deuxième extrémité de chaque panneau de milieu filtrant (230) de la pluralité de sections de panneau.

12. L'élément filtrant de la revendication 11, dans lequel les premier et deuxième organes d'étanchéité (262, 263) sont moulés sur la pluralité de sections de panneau (228), les panneaux de milieu filtrant (230) et les organes de support de panneau de milieu filtrant (232, 234) étant reçus dans les premier et deuxième organes d'étanchéité (262, 263).
